# EUROPEAN PATENT APPLICATION

(11) **EP 4 770 192 A1**
(43) Date of publication of application: **01.07.2026**
(21) Application number: 24855443.8
(22) Date of filing: 21.06.2024
(51) Int. Cl.: H04W 36/00

(54) **INFORMATION TRANSMISSION METHOD, APPARATUS, TERMINAL AND NETWORK DEVICE**

(30) Priority: 21.08.2023 CN 202311052415
(71) Applicant: Datang Mobile Communications Equipment Co., Ltd., Beijing 100085 (CN)
(72) Inventor: WANG, Ruiwei, Beijing 100085 (CN); YAN, Xue, Beijing 100085 (CN); YAN, Nan, Beijing 100085 (CN)
(74) Representative: Studio Torta S.p.A.
(86) International application number: PCT/CN2024/100530
(87) International publication number: WO 2025/039714

(57) **Abstract**

An information processing method and apparatus, and a readable storage medium are provided, which relates to the technical field of communications. The method includes: determining a first symbol set; and determining validity of a transmission occasion and/or a reception occasion based on the first symbol set.

## Description

### CROSS-REFERENCE TO RELATED APPLICATION

This application claims priority to Chinese Patent Application No. 202311052415.9, filed with the China National Intellectual Property Administration on August 21, 2023, entitled "Information Transmission Method, Apparatus, Terminal, and Network Device", the entire contents of which are incorporated herein by reference.

### TECHNICAL FIELD

This disclosure relates to the field of communication technologies, and specifically to an information transmission method, apparatus, terminal, and network device.

### BACKGROUND

To meet the mobility requirements of terminals, continuous primary cell of a secondary cell group (PSCell) change and continuous special cell of a master cell group (PCell) handover have been proposed. How to ensure the access success rate of a terminal in scenarios of continuous PSCell change or continuous PCell handover is a problem that urgently needs to be solved.

### SUMMARY

Embodiments of this disclosure provide an information transmission method, apparatus, terminal, and network device, to ensure the access success rate of a terminal in scenarios of continuous PSCell change or continuous PCell handover.

To solve the above technical problem, an embodiment of this disclosure provides an information transmission method, performed by a network device, comprising:
receiving first information sent by a terminal, where the first information is used to assist a network side in performing mobility robustness optimization (MRO) related to a target action;
performing MRO related to the target action according to the first information;
wherein the first information is used to indicate information related to the target action;
the target action comprises:
   continuous primary cell of a secondary cell group (PSCell) change, where the continuous PSCell change is at least one PSCell change performed by the terminal based on candidate cells under at least one secondary cell group (SCG) and a change execution condition corresponding to each candidate cell; or
   continuous special cell of a master cell group (PCell) handover, where the continuous PCell handover is at least one PCell handover performed by the terminal based on candidate cells under at least one master cell group (MCG) and a handover execution condition corresponding to each candidate cell.

In some embodiments, the first information comprises at least one of the following:
cell identification information, where a cell indicated by the cell identification information is a cell triggering the target action;
identification information of the terminal within the cell triggering the target action;
cell identification information of a first target cell accessed by the terminal during the target action process, where the first target cell satisfies: a cell accessed by the terminal after triggering the target action; a cell triggering modification of candidate cells and/or modification of an execution condition corresponding to a candidate cell;
identification information of the terminal within the accessed first target cell during the execution of the target action process;
first indication information, where the first indication information is used to indicate occurrence of a secondary cell group (SCG) failure, a random access failure, or a radio link failure (RLF) during the target action process;
cell identification information of a second target cell, where the second target cell is a cell accessed by the terminal during the target action process;
identification information of the terminal within the second target cell;
a candidate cell list and/or an execution condition corresponding to a candidate cell updated during the target action process;
a candidate cell list and/or an execution condition corresponding to a candidate cell configured before the target action.

In some embodiments, the receiving first information sent by a terminal comprises:
receiving a first target message sent by the terminal, where the first target message carries the first information;
wherein the first target message comprises at least one of the following:
   a secondary cell group (SCG) failure message;
   a radio link failure (RLF) report;
   a successful handover report;
   another report other than an RLF report and a successful handover report.

In some embodiments, the method further comprises:
sending second information to a target node, where the second information comprises the first information, and the second information is used for the target node to perform MRO.

In some embodiments, the sending second information to a target node comprises:
sending a second target message to a target node, where the second target message carries the second information;
wherein the second target message comprises at least one of the following:
   an SCG failure information report message;
   an SCG failure transfer message;
   another Inter-Node (e.g., Xn) interface message other than an SCG failure information report message and an SCG failure transfer message;
   a failure indication message;
   a handover report message;
   an uplink RAN configuration transfer message;
   a downlink RAN configuration transfer message;
   another Inter-Node (e.g., Xn or NG) interface message other than a failure indication message, a handover report message, an uplink RAN configuration transfer message, and a downlink RAN configuration transfer message.

In some embodiments, in a case where the target action is continuous PSCell change, the target node comprises at least one of the following:
a node triggering the continuous PSCell change;
a node triggering update of a candidate cell list for PSCell during the continuous PSCell change process;
a first Secondary Node (SN), where the first SN is an SN connected by the terminal before changing to a second SN, and the second SN is an SN that the terminal has accessed and that provides service to the terminal;
a target node when Secondary Node change fails.

In some embodiments, in a case where the target action is continuous PCell handover, the target node comprises at least one of the following:
a node triggering the continuous PCell handover;
a node triggering update of a candidate cell list during the continuous PCell handover process;
a node where a target cell of the handover is located;
a node where a source cell of a successful handover is located.

In some embodiments, in a case where the target action is continuous PSCell change, the second information further comprises at least one of the following:
candidate cells for the continuous PSCell change and/or change execution conditions corresponding to the candidate cells for the continuous PSCell change;
candidate cells updated during the continuous PSCell change process and/or change execution conditions corresponding to the candidate cells updated during the continuous PSCell change process;
a configuration node of change execution conditions corresponding to candidate cells for the continuous PSCell change;
second indication information, where the second indication information is used to indicate that continuous PSCell change was configured when an SCG failure or random access failure occurred.

Embodiments of this disclosure also provide an information transmission method, performed by a terminal, comprising:
sending first information to a network device, where the first information is used for a network side to perform mobility robustness optimization (MRO) related to a target action;
wherein the first information is used to indicate information related to the target action;
the target action comprises:
continuous primary cell of a secondary cell group (PSCell) change, where the continuous PSCell change is at least one PSCell change performed by the terminal based on candidate cells under at least one secondary cell group (SCG) and a change execution condition corresponding to each candidate cell; or
continuous special cell of a master cell group (PCell) handover, where the continuous PCell handover is at least one PCell handover performed by the terminal based on candidate cells under at least one master cell group (MCG) and a handover execution condition corresponding to each candidate cell.

In some embodiments, the first information comprises at least one of the following:
cell identification information, where a cell indicated by the cell identification information is a cell triggering the target action;
identification information of the terminal within the cell triggering the target action;
cell identification information of a first target cell accessed by the terminal during the target action process, where the first target cell satisfies: a cell accessed by the terminal after triggering the target action; a cell triggering modification of candidate cells and/or modification of an execution condition corresponding to a candidate cell;
identification information of the terminal within the accessed first target cell during the execution of the target action process;
first indication information, where the first indication information is used to indicate occurrence of a secondary cell group (SCG) failure, a random access failure, or a radio link failure (RLF) during the target action process;
cell identification information of a second target cell, where the second target cell is a cell accessed by the terminal during the target action process;
identification information of the terminal within the second target cell;
a candidate cell list and/or an execution condition corresponding to a candidate cell updated during the target action process;
a candidate cell list and/or an execution condition corresponding to a candidate cell configured before the target action.

In some embodiments, the sending first information to a network device comprises:
sending a first target message to the network device, where the first target message carries the first information;
wherein the first target message comprises at least one of the following:
   a secondary cell group (SCG) failure message;
   a radio link failure (RLF) report;
   a successful handover report;
   another report other than an RLF report and a successful handover report.

Embodiments of this disclosure also provide a network device, comprising a memory, a transceiver, and a processor:
the memory is configured to store a computer program; the transceiver is configured to transmit and receive data under control of the processor; the processor is configured to read the computer program in the memory and perform the following steps:
receiving, via the transceiver, first information sent by a terminal, where the first information is used to assist a network side in performing mobility robustness optimization (MRO) related to a target action; performing MRO related to the target action according to the first information;
wherein the first information is used to indicate information related to the target action;
the target action comprises:
   continuous primary cell of a secondary cell group (PSCell) change, where the continuous PSCell change is at least one PSCell change performed by the terminal based on candidate cells under at least one secondary cell group (SCG) and a change execution condition corresponding to each candidate cell; or
   continuous special cell of a master cell group (PCell) handover, where the continuous PCell handover is at least one PCell handover performed by the terminal based on candidate cells under at least one master cell group (MCG) and a handover execution condition corresponding to each candidate cell.

In some embodiments, the first information comprises at least one of the following:
cell identification information, where a cell indicated by the cell identification information is a cell triggering the target action;
identification information of the terminal within the cell triggering the target action;
cell identification information of a first target cell accessed by the terminal during the target action process, where the first target cell satisfies: a cell accessed by the terminal after triggering the target action; a cell triggering modification of candidate cells and/or modification of an execution condition corresponding to a candidate cell;
identification information of the terminal within the accessed first target cell during the execution of the target action process;
first indication information, where the first indication information is used to indicate occurrence of a secondary cell group (SCG) failure, a random access failure, or a radio link failure (RLF) during the target action process;
cell identification information of a second target cell, where the second target cell is a cell accessed by the terminal during the target action process;
identification information of the terminal within the second target cell;
a candidate cell list and/or an execution condition corresponding to a candidate cell updated during the target action process;
a candidate cell list and/or an execution condition corresponding to a candidate cell configured before the target action.

In some embodiments, the processor is configured to read the computer program in the memory and perform the following operation:
receiving, via the transceiver, a first target message sent by the terminal, where the first target message carries the first information;
wherein the first target message comprises at least one of the following:
   a secondary cell group (SCG) failure message;
   a radio link failure (RLF) report;
   a successful handover report;
   another report other than an RLF report and a successful handover report.

In some embodiments, the processor is configured to read the computer program in the memory and further perform the following operation:
sending, via the transceiver, second information to a target node, where the second information comprises the first information, and the second information is used for the target node to perform MRO.

In some embodiments, the processor is configured to read the computer program in the memory and perform the following operation:
sending, via the transceiver, a second target message to a target node, where the second target message carries the second information;
wherein the second target message comprises at least one of the following:
   an SCG failure information report message;
   an SCG failure transfer message;
   another Inter-Node (e.g., Xn) interface message other than an SCG failure information report message and an SCG failure transfer message;
   a failure indication message;
   a handover report message;
   an uplink RAN configuration transfer message;
   a downlink RAN configuration transfer message;
   another Inter-Node (e.g., Xn or NG) interface message other than a failure indication message, a handover report message, an uplink RAN configuration transfer message, and a downlink RAN configuration transfer message.

In some embodiments, in a case where the target action is continuous PSCell change, the target node comprises at least one of the following:
a node triggering the continuous PSCell change;
a node triggering update of a candidate cell list for PSCell during the continuous PSCell change process;
a first Secondary Node (SN), where the first SN is an SN connected by the terminal before changing to a second SN, and the second SN is an SN that the terminal has accessed and that provides service to the terminal;
a target node when Secondary Node change fails.

In some embodiments, in a case where the target action is continuous PCell handover, the target node comprises at least one of the following:
a node triggering the continuous PCell handover;
a node triggering update of a candidate cell list during the continuous PCell handover process;
a node where a target cell of the handover is located;
a node where a source cell of a successful handover is located.

In some embodiments, in a case where the target action is continuous PSCell change, the second information further comprises at least one of the following:
candidate cells for the continuous PSCell change and/or change execution conditions corresponding to the candidate cells for the continuous PSCell change;
candidate cells updated during the continuous PSCell change process and/or change execution conditions corresponding to the candidate cells updated during the continuous PSCell change process;
a configuration node of change execution conditions corresponding to candidate cells for the continuous PSCell change;
second indication information, where the second indication information is used to indicate that continuous PSCell change was configured when an SCG failure or random access failure occurred.

Embodiments of this disclosure also provide a terminal, comprising a memory, a transceiver, and a processor:
the memory is configured to store a computer program; the transceiver is configured to transmit and receive data under control of the processor; the processor is configured to read the computer program in the memory and perform the following operation:
sending first information to a network device, where the first information is used for a network side to perform mobility robustness optimization (MRO) related to a target action;
wherein the first information is used to indicate information related to the target action;
the target action comprises:
   continuous primary cell of a secondary cell group (PSCell) change, where the continuous PSCell change is at least one PSCell change performed by the terminal based on candidate cells under at least one secondary cell group (SCG) and a change execution condition corresponding to each candidate cell; or
   continuous special cell of a master cell group (PCell) handover, where the continuous PCell handover is at least one PCell handover performed by the terminal based on candidate cells under at least one master cell group (MCG) and a handover execution condition corresponding to each candidate cell.

In some embodiments, the first information comprises at least one of the following:
cell identification information, where a cell indicated by the cell identification information is a cell triggering the target action;
identification information of the terminal within the cell triggering the target action;
cell identification information of a first target cell accessed by the terminal during the target action process, where the first target cell satisfies: a cell accessed by the terminal after triggering the target action; a cell triggering modification of candidate cells and/or modification of an execution condition corresponding to a candidate cell;
identification information of the terminal within the accessed first target cell during the execution of the target action process;
first indication information, where the first indication information is used to indicate occurrence of a secondary cell group (SCG) failure, a random access failure, or a radio link failure (RLF) during the target action process;
cell identification information of a second target cell, where the second target cell is a cell accessed by the terminal during the target action process;
identification information of the terminal within the second target cell;
a candidate cell list and/or an execution condition corresponding to a candidate cell updated during the target action process;
a candidate cell list and/or an execution condition corresponding to a candidate cell configured before the target action.

In some embodiments, the processor is configured to read the computer program in the memory and perform the following operation:
sending, via the transceiver, a first target message to the network device, where the first target message carries the first information;
wherein the first target message comprises at least one of the following:
   a secondary cell group (SCG) failure message;
   a radio link failure (RLF) report;
   a successful handover report;
   another report other than an RLF report and a successful handover report.

Embodiments of this disclosure also provide an information transmission apparatus, applied to a network device, comprising:
a receiving unit, configured to receive first information sent by a terminal, where the first information is used to assist a network side in performing mobility robustness optimization (MRO) related to a target action; and perform MRO related to the target action according to the first information;
wherein the first information is used to indicate information related to the target action;
the target action comprises:
   continuous primary cell of a secondary cell group (PSCell) change, where the continuous PSCell change is at least one PSCell change performed by the terminal based on candidate cells under at least one secondary cell group (SCG) and a change execution condition corresponding to each candidate cell; or
   continuous special cell of a master cell group (PCell) handover, where the continuous PCell handover is at least one PCell handover performed by the terminal based on candidate cells under at least one master cell group (MCG) and a handover execution condition corresponding to each candidate cell.

Embodiments of this disclosure also provide an information transmission apparatus, applied to a terminal, comprising:
a first sending unit, configured to send first information to a network device, where the first information is used for a network side to perform mobility robustness optimization (MRO) related to a target action;
wherein the first information is used to indicate information related to the target action;
the target action comprises:
   continuous primary cell of a secondary cell group (PSCell) change, where the continuous PSCell change is at least one PSCell change performed by the terminal based on candidate cells under at least one secondary cell group (SCG) and a change execution condition corresponding to each candidate cell; or
   continuous special cell of a master cell group (PCell) handover, where the continuous PCell handover is at least one PCell handover performed by the terminal based on candidate cells under at least one master cell group (MCG) and a handover execution condition corresponding to each candidate cell.

Embodiments of this disclosure also provide a processor-readable storage medium, storing a computer program, where the computer program is used to cause the processor to execute the methods described above.

The beneficial effects of this disclosure are as follows:
In the above solution, by receiving information related to continuous PSCell change or continuous PCell handover sent by a terminal, the network side is assisted in performing MRO related to continuous PSCell change or continuous PCell handover. This can ensure the access success rate of a terminal in scenarios of continuous PSCell change or continuous PCell handover, and improve network performance metrics.

### BRIEF DESCRIPTION OF THE DRAWINGS

In order to more clearly illustrate the embodiments of this disclosure or the technical solutions in the related art, the drawings used in the description of the embodiments or the related art will be briefly introduced below. Obviously, the drawings in the following description are only some embodiments of this disclosure. For those of ordinary skill in the art, other drawings can be obtained based on these drawings without creative effort.
FIG. 1 is a structural diagram of a network system applicable to an embodiment of this disclosure;
FIG. 2 is a first schematic flowchart of an information transmission method according to an embodiment of this disclosure;
FIG. 3 is a schematic flowchart illustrating SCG failure occurrence during continuous PSCell change;
FIG. 4 is a schematic flowchart illustrating random access failure occurrence during continuous PSCell change;
FIG. 5 is a schematic flowchart illustrating RLF occurrence during continuous PCell handover;
FIG. 6 is a schematic flowchart illustrating random access failure occurrence during continuous PCell handover;
FIG. 7 is a second schematic flowchart of an information transmission method according to an embodiment of this disclosure;
FIG. 8 is a first schematic block diagram of an information transmission apparatus according to an embodiment of this disclosure;
FIG. 9 is a structural diagram of a network device according to an embodiment of this disclosure;
FIG. 10 is a second schematic block diagram of an information transmission apparatus according to an embodiment of this disclosure;
FIG. 11 is a structural diagram of a terminal according to an embodiment of this disclosure.

### DETAILED DESCRIPTION

The technical solutions in the embodiments of this disclosure will be clearly and completely described below with reference to the accompanying drawings in the embodiments of this disclosure. Obviously, the described embodiments are only part of the embodiments of this disclosure, not all of them. Based on the embodiments of this disclosure, all other embodiments obtained by those of ordinary skill in the art without creative effort shall fall within the protection scope of this disclosure.

The terms "first", "second", etc. in the specification and claims of this disclosure are used to distinguish similar objects, and are not necessarily used to describe a specific order or sequence. It should be understood that the data used in this way may be interchangeable under appropriate circumstances, so that the embodiments of this disclosure described herein can be implemented in an order other than those illustrated or described herein. In addition, the terms "comprise", "have" and any variations thereof are intended to cover non-exclusive inclusion. For example, a process, method, system, product, or device that includes a series of steps or units is not necessarily limited to those clearly listed steps or units, but may include other steps or units not clearly listed or inherent to these processes, methods, products, or devices.

In the embodiments of this disclosure, the term "and/or" describes the association relationship of associated objects, indicating that there may be three relationships. For example, A and/or B may indicate: A exists alone, A and B exist simultaneously, or B exists alone. The character "/" generally indicates an "or" relationship between the associated objects. The term "plurality" in the embodiments of this disclosure refers to two or more, and other quantifiers are similar.

In the embodiments of this disclosure, the terms "exemplary" or "for example" are used to mean examples, illustrations, or explanations. Any embodiment or design solution described as "exemplary" or "for example" in the embodiments of this disclosure should not be construed as more preferred or advantageous than other embodiments or design solutions. Rather, the use of the terms "exemplary" or "for example" is intended to present related concepts in a specific manner.

First, the related concepts mentioned in this disclosure are briefly explained as follows.

### 1. Multi-Radio Dual Connectivity (MR-DC) network architecture

In a multi-connectivity architecture, User Equipment (UE) may connect to a Master Node (MN), and also connect to one or more Secondary Nodes (SN), and perform signaling and/or data interaction with these network nodes. Both MN and SN nodes can be Long Term Evolution (LTE)/e-LTE/New Radio (NR) nodes. When there is one MN node and one SN node, it can be called Dual Connectivity (DC).

When the UE is in a connected state, it can connect to one or more network-side nodes. The network nodes may be in one or more Radio Access Technologies (RATs). For example, when the MN is an LTE node and the SN is an NR node, it is (NG)EN-DC dual connectivity; when the MN is an NR node and the SN is an LTE node, it is NE-DC dual connectivity; when both MN and SN are NR nodes, it is NR-NR-DC.

A secondary cell group (SCG) is a group of serving cells under an SN in MR-DC, comprising a primary cell of a master or secondary cell group (PSCell) and possibly one or more Secondary Cells (SCells).

### 2. Traditional special cell of a master cell group (PCell) failure handling

For traditional handover failure or radio link failure, the UE generates a radio link failure (RLF) report.

The RLF report contains the following content:
Measurement results of the UE's last serving cell;
Identification information of the source cell from which the UE performed handover;
Neighbor cell measurement results after the UE confirms handover failure or radio link failure;
UE location information;
Identification information of the cell where the UE failed;
Identification information of the cell where the UE performed reestablishment;
Identification information of the cell where the UE performed conditional handover recovery after conditional handover failure;
UE reporting timer: duration from the last time the UE confirmed receiving a handover initiation message to connection failure;
Connection failure cause, handover failure or radio link failure;
Cell Radio Network Temporary Identifier (C-RNTI) used by the UE at the time of connection failure;
Radio link failure sub-cause, T310 expiry or random access problem or Radio Link Control (RLC) layer reaching maximum retransmission or Beam Failure Recovery Failure (BFRF);
Duration from when the UE confirms connection failure to when the UE reports this RLF report;
Tracking Area Code (TAC) of the connection failure cell;
Blue Tooth (BT) related measurement results;
Wireless Local Area Network (WLAN) related measurement results;
The above cell identification information uses Cell Global Identity (CGI)/Physical Cell Identity (PCI) + frequency point identification.

After the UE records the RLF report, it notifies the network side to obtain it via an RRC connection setup complete, RRC connection reconfiguration complete, RRC connection reestablishment complete, or RRC resume complete message. The network side sends a UE information request message to the UE, and the UE sends the RLF report to the network via a UE information response message, and the UE clears the previously recorded information.

After the network receives the RLF report, it is used for handover configuration optimization. Inter-node messages involved include failure indication message and handover report message.
failure indication message:
   After a network node obtains the UE's RLF report, if the current node is not the node where the failure occurred, it needs to forward the RLF report and other related information to the failure network node via inter-node signaling to facilitate analysis and optimization by the failure node.
handover report message:
   After analyzing the failure indication message, the network failure node may need to continue sending a handover report message.

### 3. Traditional PSCell Failure related handling

RLF is divided into master cell group (MCG) and secondary cell group (SCG) types. If MCG experiences radio link failure, the UE triggers an RRC connection reestablishment procedure. If SCG experiences failure, the UE sends an SCG FAILURE INFORMATION message to the MN node.

This message mainly includes: the cell ID of the PSCell where the failure occurred, the source PSCell cell ID from which PSCell change occurred, the time length from PSCell change to SCG failure, random access related information when random access failure occurs, SCG failure type, UE measurement results, etc.

After the network receives the SCG FAILURE INFORMATION message, it is used for PSCell mobility optimization. Inter-node messages involved include SCG failure information report message and SCG failure transfer message.

The 3rd Generation Partnership Project (3GPP) introduced SCG failure information report message and SCG failure transfer message in R17 to handle SCG failure analysis in NR-NR-DC scenarios.

SCG failure information report is a message sent from MN to SN, including the content received by the MN via air interface in the SCG failure information message, UE ID information, etc.;

When the SN receives the SCG failure information report message and, after analysis, finds that other nodes also need to perform parameter optimization, it sends an SCG failure transfer message to the MN, including UE ID information. The MN may perform optimization itself, or continue to send SCG failure information report messages to other relevant SN nodes.

### 4. R18 Mobility Enhancement

Continuous PSCell change for SCG also involves Layer 3 pre-configuring multiple PSCell candidate cells and execution conditions. The UE evaluates the execution conditions, and upon satisfying the conditions, performs PSCell change; then saves the configuration and continues to evaluate the execution conditions, and upon satisfying the conditions, continues to perform PSCell change until the configuration for continuous PSCell change is released.

Continuous PCell handover for MCG is similar to continuous PSCell change for SCG, also involving pre-configuring multiple PCell candidate cells and execution conditions. The UE evaluates the execution conditions, and upon satisfying the conditions, performs PCell handover; then saves the configuration and continues to evaluate the execution conditions, and upon satisfying the conditions, continues to perform PCell handover until the continuous handover configuration is released.

Embodiments of this disclosure are described below in conjunction with the accompanying drawings. The information transmission method, apparatus, terminal, and network device provided by embodiments of this disclosure can be applied to a wireless communication system. The wireless communication system can be a system adopting the fifth generation (5G) mobile communication technology (hereinafter referred to as 5G system for short). Those skilled in the art will appreciate that the 5G NR system is merely an example and is not limiting.

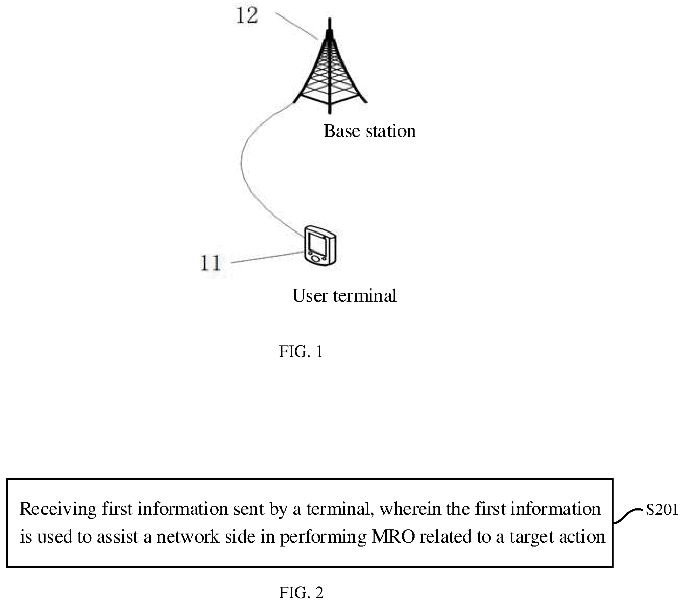

Referring to FIG. 1, which is a structural diagram of a network system applicable to an embodiment of this disclosure, as shown in FIG. 2, it includes a user terminal 11 and a base station 12, wherein the user terminal 11 can be User Equipment (UE), for example: it can be a mobile phone, a tablet computer, a laptop computer, a personal digital assistant (PDA), a Mobile Internet Device (MID), or a wearable device, etc. It should be noted that the specific type of the user terminal 11 is not limited in the embodiments of this disclosure. The base station 12 mentioned above can be a 5G and later version base station (e.g., gNB, 5G NR NB), or a base station in other communication systems or a gateway station supporting satellite communication, or called Node B. It should be noted that the embodiments of this disclosure only take a 5G base station as an example, but do not limit the specific type of the base station 12.

Embodiments of this disclosure provide an information transmission method, apparatus, terminal, and network device, to ensure the access success rate of a terminal in scenarios of continuous PSCell change or continuous PCell handover.

Among them, the method and apparatus are based on the same inventive concept. Since the principles for solving problems by the method and apparatus are similar, the implementation of the apparatus and the method can be referred to each other, and repeated descriptions are omitted.

As shown in FIG. 2, an embodiment of this disclosure provides an information transmission method, performed by a network device, comprising:
Step S101: Receiving first information sent by a terminal, where the first information is used to assist a network side in performing mobility robustness optimization (MRO) related to a target action;
perform MRO related to the target action according to the first information;
wherein the first information is used to indicate information related to the target action;

In some embodiments, the target action comprises at least one of the following:
A11. Continuous primary cell of a secondary cell group (PSCell) change, where the continuous PSCell change is at least one PSCell change performed by the terminal based on candidate cells under at least one secondary cell group (SCG) and a change execution condition corresponding to each candidate cell;
That is to say, continuous PSCell change can be understood as the network side pre-configuring candidate cells under one or more SCGs and a change execution condition corresponding to each candidate cell for the terminal. The terminal can change among multiple candidate cells based on actual conditions and the change execution conditions. That is to say, compared with non-continuous PSCell change, continuous PSCell change does not require the network side to perform measurement collection, mobility decision, and signaling for PSCell change to the terminal between each change.

A12. Continuous special cell of a master cell group (PCell) handover, where the continuous PCell handover is at least one PCell handover performed by the terminal based on candidate cells under at least one master cell group (MCG) and a handover execution condition corresponding to each candidate cell;
That is to say, continuous PCell handover can be understood as the network side pre-configuring candidate cells under one or more MCGs and a handover execution condition corresponding to each candidate cell for the terminal. The terminal can switch among multiple candidate cells based on actual conditions and the handover execution conditions. That is to say, compared with non-continuous PCell handover, continuous PCell handover does not require the network side to perform measurement collection, mobility decision, and signaling for handover to the terminal between each handover.

It should be noted that the embodiments of this disclosure mainly target scenarios of continuous PSCell change and continuous PCell handover, proposing an information reporting method for continuous PSCell change and/or continuous PCell handover. By recording information related to the continuous PSCell change and/or continuous PCell handover process and sending it to the network side, it can assist the network side in performing MRO related to continuous PSCell change and/or continuous PCell handover, to improve the success rate of continuous PCell handover and/or continuous PSCell change, and improve network performance metrics.

In some embodiments, the node performing MRO can be the network device that directly receives the first information sent by the terminal, or can be other network devices besides the network device that receives the first information sent by the terminal. That is, after receiving the first information sent by the terminal, the network device sends the first information to other network devices to enable those other network devices to perform MRO.

In some embodiments, in one implementation, the first information comprises at least one of the following:
B 11. Cell identification information, where a cell indicated by the cell identification information is a cell triggering the target action;
It should be noted that in the case of A11 above, continuous PSCell change can be triggered by either a Master Node or a Secondary Node. For example, if continuous PSCell change is triggered by a Master Node, then in this case, the cell identification information mentioned refers to the cell identification information of a cell under the Master Node, typically the primary cell (PCell) under the Master Node. For example, if continuous PSCell change is triggered by a Secondary Node, then in this case, the cell identification information mentioned refers to the cell identification information of a cell under the Secondary Node, typically the PSCell under the Secondary Node.
B 12. Identification information of the terminal within the cell triggering the target action;
It should be noted here that for different cells, the identifier used by the terminal may not be the same. The terminal's identifier corresponds to the cell. In this case, the cell triggering the target action can also be indirectly indicated by the identification information of the terminal within the cell triggering the target action. This identification information can be understood as terminal identification information.
B 13. Cell identification information of a first target cell accessed by the terminal during the target action process;
It should be noted that the first target cell satisfies: a cell accessed by the terminal after triggering the target action; a cell triggering modification of candidate cells and/or modification of an execution condition corresponding to a candidate cell;
It should be noted here that in scenarios of continuous PSCell change and continuous PCell handover, after the terminal accesses a certain cell, this cell can modify the cell information that the terminal can subsequently access, i.e., modify candidate cells, and can also modify the execution condition corresponding to a candidate cell. This execution condition can be understood as the condition that needs to be satisfied for the terminal to access that cell. In this case, it is necessary to record which cells among the cells accessed by the terminal performed modification of candidate cells and/or modification of candidate cell corresponding execution conditions.

For example, for continuous PSCell change, the terminal changes from Secondary Node 1 to Secondary Node 2, and then from Secondary Node 2 to Secondary Node 3. The cell accessed by the terminal under Secondary Node 2 modified the candidate cells. Then the terminal needs to record the identification information of that cell under Secondary Node 2.

B 14. Identification information of the terminal within the accessed first target cell during the execution of the target action process;
In some embodiments, the usage of this case is similar to B 12, i.e., here the first target cell is indirectly indicated by the identification information of the terminal within the first target cell.

Regarding B13 and B14 above, it should be noted that, for example, continuous PSCell change is triggered. When the terminal accesses a specific PSCell, that PSCell further triggers modification of the candidate cell list and/or the execution condition corresponding to a candidate cell. Then the terminal needs to record the cell identification information of that PSCell and/or the identification information of the terminal within that PSCell.

B 15. First indication information, where the first indication information is used to indicate occurrence of a secondary cell group (SCG) failure, a random access failure, or a radio link failure (RLF) during the target action process;
It should be noted that SCG failure, random access failure, or RLF can all be understood as a change (change or handover) failure occurring during the terminal's change process. That is, by sending the first indication information, the network can be notified that a change failure occurred during the target action process, and the first indication information can indicate specifically which type of failure occurred.

B16. Cell identification information of a second target cell, where the second target cell is a cell accessed by the terminal during the target action process;
It should be noted here that in scenarios of continuous PSCell change and continuous PCell handover, the terminal can access one cell or multiple cells. This information is to record which cells the terminal accessed during the continuous PSCell change or continuous PCell handover process.

B 17. Identification information of the terminal within the second target cell;
In some embodiments, the usage of this case is similar to B 12, i.e., here the second target cell is indirectly indicated by the identification information of the terminal within the second target cell.

B18. A candidate cell list and/or an execution condition corresponding to a candidate cell updated during the target action process;
It should be noted that the candidate cell list is used to indicate one or more candidate cells, e.g., the candidate cell list includes cell identification information of one or more candidate cells.

It should be noted here that in scenarios of continuous PSCell change and continuous PCell handover, after the terminal accesses a certain cell, this cell can modify the cell information that the terminal can subsequently access, i.e., modify candidate cells, and can also modify the execution condition corresponding to a candidate cell. Here, it is necessary to record the changed candidate cell information and/or the changed execution condition corresponding to a candidate cell. In some embodiments, the terminal may only report the candidate cell information and/or candidate cell corresponding execution condition that have changed. The terminal may also report all candidate cell information and/or candidate cell corresponding execution conditions after the change.

B19. A candidate cell list and/or an execution condition corresponding to a candidate cell configured before the target action;
It should be noted that the candidate cell list and/or candidate cell corresponding execution condition in this case refer to the initially configured candidate cell list and/or candidate cell corresponding execution condition before the target action is performed.

It should be noted that the above B11 and B12 can be regarded as one category, i.e., both indicate the cell triggering the target action. B13 and B 14 can be regarded as one category, i.e., both indicate the first target cell. B16 and B17 can be regarded as one category, i.e., both indicate the second target cell. For example, when the terminal only reports B11 and/or B12, it can enable the network device to clearly know the node that triggered the target action. Because the node that triggers the target action performs configuration of candidate cells and/or candidate cell corresponding execution conditions, by sending B11 and/or B 12, the node that triggered the target action can be enabled to optimize the configuration of candidate cells and/or candidate cell corresponding execution conditions, ensuring the execution success rate of the target action. For example, when the terminal only reports B13 and/or B14, it can enable the network device to clearly know the node that the terminal accessed during the target action execution process and that modified candidate cells and/or candidate cell corresponding execution conditions. This can enable that node to optimize the configuration of candidate cells and/or candidate cell corresponding execution conditions, ensuring the execution success rate of the target action. For example, when the terminal only reports B 15, it indicates that the terminal did not successfully execute the target action. At this time, the network device knows that it needs to adjust related configurations to improve the execution success rate of the target action. For example, when the terminal only reports B16 and/or B17, it can enable the network device to clearly know which cells the terminal accessed during the target action execution process, which can assist in optimizing the configuration of candidate cells and/or candidate cell corresponding execution conditions, ensuring the execution success rate of the target action. For example, when the terminal only reports B18, it can assist in optimizing the configuration of candidate cells and/or candidate cell corresponding execution conditions to improve the execution success rate of the target action. For example, when the terminal only reports B19, it can assist in optimizing the configuration of initially configured candidate cells and/or candidate cell corresponding execution conditions to improve the execution success rate of the target action. In some embodiments, the usage of combinations of the above information can be referred to the independent descriptions for each item, and will not be repeated here.

In some embodiments, in one implementation, the specific implementation of receiving first information sent by a terminal comprises:
receiving a first target message sent by the terminal, where the first target message carries the first information;
wherein the first target message comprises at least one of the following:
   C11. secondary cell group (SCG) failure message;
   C12. radio link failure (RLF) report;
   C13. Successful handover report;
   C14. Another report other than an RLF report and a successful handover report.

It should be noted here that in some embodiments, in a scenario of continuous PSCell change, if the terminal changes to access a cell under a new Secondary Node, but a radio link failure occurs soon after, or if the terminal fails random access when attempting to change to access a cell under a new Secondary Node, both of the above situations can be called SCG failure. In this case, the terminal can send an SCG failure message and/or an RLF report to the Master Node to report the first information. In some embodiments, when the terminal successfully performs handover in a scenario of continuous PSCell change, it can also report the first information in a successful handover report. Of course, the terminal can use other reports besides RLF reports and successful handover reports to report the first information. For example, the terminal uses a newly defined report to report the first information to the network.

In some embodiments, in a scenario of continuous PCell handover, if the terminal handovers to access a cell under a new Master Node, but a radio link failure occurs soon after, or if the terminal fails random access when attempting to handover to access a cell under a new Master Node, both of the above situations can be called radio link failure. In this case, the terminal can send an RLF report to the Master Node to report the first information. Of course, the terminal can also use other reports besides RLF reports and successful handover reports to report the first information. For example, the terminal uses a newly defined report to report the first information to the network.

It should also be noted that for Secondary Cell change failure or SCG failure, the terminal can directly send the first information to the network device. For handover failure or RLF failure, the terminal needs to first send an indication message to the network, then wait for a network acquisition request, and after receiving the network acquisition request, send the first information to the network device.

It should be noted that because the node that actually performs MRO may not be the node that receives the first information, in some embodiments, in one implementation, after receiving the first information, the network device may also need to perform the following steps:
send second information to a target node, where the second information comprises the first information, and the second information is used for the target node to perform MRO.

By passing the second information containing the first information to the target node, the target node is assisted in performing MRO, thereby improving the success rate of continuous PCell handover and/or continuous PSCell change.

It should be noted that depending on the target action, the target node receiving the second information and the content contained in the second information may also differ. The following explains this under different circumstances.
I. The target action is continuous PSCell change.

In some embodiments, in one implementation, the second information further comprises at least one of the following:
D11. Candidate cells for the continuous PSCell change and/or change execution conditions corresponding to the candidate cells for the continuous PSCell change;
In some embodiments, this information can be sent to the target node in combination with any one or more pieces of information in the first information to assist the target node in performing MRO.

It should be noted that these candidate cells and/or candidate cell corresponding change execution conditions can be considered as the initially configured candidate cells and/or candidate cell corresponding change execution conditions before the continuous PSCell change.

D12. Candidate cells updated during the continuous PSCell change process and/or change execution conditions corresponding to the candidate cells updated during the continuous PSCell change process;
In some embodiments, this information can be sent to the target node in combination with any one or more pieces of information in the first information to assist the target node in performing MRO.

D13. A configuration node of change execution conditions corresponding to candidate cells for the continuous PSCell change;
It should be noted that this information is used to indicate which nodes configured the change execution conditions for candidate cells. After knowing this information, the target node can continue to pass related information to the configuration node(s) if it is not the configuration node itself, to assist in optimizing the change execution conditions.

In some embodiments, this information can be sent to the target node in combination with any one or more pieces of information in the first information to assist the target node in performing MRO.

D14. Second indication information, where the second indication information is used to indicate that continuous PSCell change was configured when an SCG failure or random access failure occurred;
It should be noted that by indicating this information, the target node can clearly know that an SCG failure or random access failure occurred during the continuous PSCell change process, and based on this information, it can perform MRO.

In some embodiments, this information can be sent to the target node in combination with any one or more pieces of information in the first information to assist the target node in performing MRO.

In some embodiments, usually when the first information does not include the first indication information, the second information may include the second indication information.

In some embodiments, in one implementation, the target node comprises at least one of the following:
D21. A node triggering the continuous PSCell change;
That is to say, sending the second information to the node that triggered the continuous PSCell change can enable that node to optimize the configuration of candidate cells and/or candidate cell corresponding execution conditions, improving the success rate of continuous PSCell change for the terminal.

D22. A node triggering update of a candidate cell list for PSCell during the continuous PSCell change process;
That is to say, sending the second information to the node that triggered the candidate cell list update can enable that node to optimize the configured candidate cells, ensuring that the configured candidate cells can meet the terminal's usage requirements, improving the success rate of continuous PSCell change for the terminal.

D23. A first Secondary Node (SN), where the first SN is an SN connected by the terminal before changing to a second SN, and the second SN is an SN that the terminal has accessed and that provides service to the terminal;
For example, the terminal initially accessed Secondary Node 1, then successively changed to access Secondary Node 2 and Secondary Node 3, and Secondary Node 3 is the node the terminal finally accessed. In this case, the first SN refers to Secondary Node 2.

It should be noted that this case refers to sending the second information to the Secondary Node that the terminal was connected to before the change. This can enable that Secondary Node to modify candidate cells and/or candidate cell corresponding execution conditions to meet the terminal's usage requirements, improving the success rate of continuous PSCell change for the terminal.

D24. A target node when Secondary Node change fails;
For example, the terminal initially accessed Secondary Node 1, then successively changed to access Secondary Node 4 and Secondary Node 5, and the terminal experienced a Secondary Node change failure on Secondary Node 5. In this case, the target node refers to Secondary Node 5.

It should be noted that this case refers to sending the second information to the target node of the terminal's change. This can enable the target node to adjust related parameters to reduce the probability of terminal change access failure.

II. The target action is continuous PCell handover.

In some embodiments, in one implementation, the target node comprises at least one of the following:
E11. A node triggering the continuous PCell handover;
That is to say, sending the second information to the node that triggered the continuous PCell handover can enable that node to optimize the configuration of candidate cells and/or candidate cell corresponding execution conditions, improving the success rate of continuous PCell handover for the terminal.

E12. A node triggering update of a candidate cell list during the continuous PCell handover process;
That is to say, sending the second information to the node that triggered the candidate cell list update can enable that node to optimize the configured candidate cells, ensuring that the configured candidate cells can meet the terminal's usage requirements, improving the success rate of continuous PCell handover for the terminal.

E13. A node where a target cell of the handover is located;
For example, the terminal initially accessed Master Node 1, then successively handovered to access Master Node 2, and then failed when trying to handover to Master Node 3. Master Node 3 is the target node when the terminal's handover failed.

It should be noted that this case refers to sending the second information to the target node of the terminal's handover. Because handover failure may be caused by unreasonable resource allocation by the target node, this can enable the target node to optimize resources and improve handover success rate.

E14. A node where a source cell of a successful handover is located;
For example, the terminal initially accessed Master Node 1, then successively handovered to access Master Node 4 and Master Node 5, and Master Node 5 is the node the terminal finally accessed. In this case, the node where the source cell is located refers to Master Node 4.

It should be noted that this case refers to sending the second information to the Master Node that the terminal was connected to before the handover. This can enable that Master Node to configure suitable candidate cells and/or candidate cell corresponding execution conditions, improving the success rate of continuous PCell handover for the terminal.

In some embodiments, in one implementation, the sending second information to a target node comprises:
sending a second target message to a target node, where the second target message carries the second information;
wherein the second target message comprises at least one of the following:
   F11. SCG failure information report message;
   F12. SCG failure transfer message;
   It should be noted that the SCG failure transfer message can also be called a secondary cell group failure transfer message.

F13. Another Inter-Node (e.g., Xn) interface message other than an SCG failure information report message and an SCG failure transfer message;
In some embodiments, the above F11-F13 mainly apply to scenarios where the network device sends second information to a target node in the case of continuous PSCell change. In some embodiments, the other Inter-Node interface message besides the SCG failure information report message and the SCG failure transfer message can be a newly added Inter-Node interface message.
F14. failure indication message;
F15. handover report message;
F16. uplink RAN configuration transfer message;
F17. downlink RAN configuration transfer message;
F18. Another Inter-Node (e.g., Xn or NG) interface message other than a failure indication message, a handover report message, an uplink RAN configuration transfer message, and a downlink RAN configuration transfer message.

In some embodiments, the above F14-F18 mainly apply to scenarios where the network device sends second information to a target node in the case of continuous PCell handover. In some embodiments, the other Inter-Node interface message besides the failure indication message, handover report message, uplink RAN configuration transfer message, and downlink RAN configuration transfer message can be a newly added Inter-Node interface message.

The specific implementations of embodiments of this disclosure are illustrated with examples below.

Application Scenario I: SN-triggered Continuous PSCell Change Scenario
Secondary Node 1 (SN1) triggers continuous PSCell change from its PSCell, first changing to the PSCell of Secondary Node 2 (SN2), then changing the PSCell to the PSCell of Secondary Node 3 (SN3).

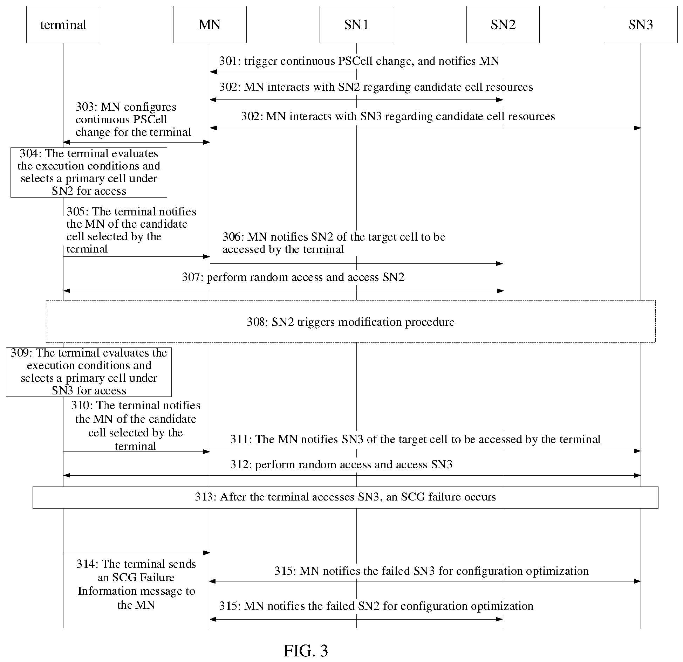

As shown in FIG. 3, the specific implementation process of Scenario I includes:
Step 301: SN1 triggers continuous PSCell change from its primary cell (PSCell), and notifies the Master Node (MN).

In some embodiments, the message sent by SN1 contains a candidate cell list selected by SN1 and the execution conditions corresponding to the candidate cells. The candidate cell list includes cells under SN2 and SN3.

Step 302: The MN interacts with SN2 and SN3 respectively regarding candidate cell resources;
In some embodiments, the MN sends a message to SN2 and SN3 where the candidate cells are located. SN2 and SN3 can make further selections within the range of the PSCell candidate cell list recommended by SN1, then pre-configure PSCell candidate cell resources, and reply to the MN with a message carrying the pre-configured PSCell candidate cells.

Step 303: The MN configures continuous PSCell change for the terminal;
In some embodiments, the implementation process includes: The MN sends an RRC connection reconfiguration message to the terminal. This message contains the PSCell candidate cell list and the execution conditions corresponding to the candidate cells.

The terminal returns an RRC connection reconfiguration complete message to the MN.
Step 304: The terminal evaluates the execution conditions and selects a primary cell under SN2 for access;
Step 305: The terminal notifies the MN of the candidate cell selected by the terminal;
The terminal can notify the MN of the selected candidate cell via the RRC connection reconfiguration complete message.

Step 306: The MN notifies SN2 of the target cell to be accessed by the terminal;
The MN can notify SN2 of the target cell to be accessed by the terminal via a Secondary Node reconfiguration complete message.

Step 307: Perform random access and access SN2;
Step 308: SN2 triggers a modification procedure.

For example: It may modify the candidate cell list and/or the execution conditions corresponding to candidate cells, etc.

In some embodiments, the execution process includes: SN2 sends a modification request to the MN. After receiving the modification request, the MN needs to notify SN3 to modify pre-configured resources. SN3 sends the new pre-configured resources to the MN, which sends them to the terminal via an RRC connection reconfiguration message. The terminal feeds back an RRC connection reconfiguration complete message to the MN to confirm the pre-configured resources.

It should be noted that this step 308 is an optional step.
Step 309: The terminal evaluates the execution conditions and selects a primary cell under SN3 for access;
Step 310: The terminal notifies the MN of the candidate cell selected by the terminal;
Step 311: The MN notifies SN3 of the target cell to be accessed by the terminal;
Step 312: Perform random access and access SN3;
Step 313: After the terminal accesses SN3, an SCG failure occurs;
Step 314: The terminal sends an SCG FAILURE INFORMATION message to the MN.
Step 315: The MN notifies the failed SN3 and the previous SN2 (before the change) for configuration optimization.

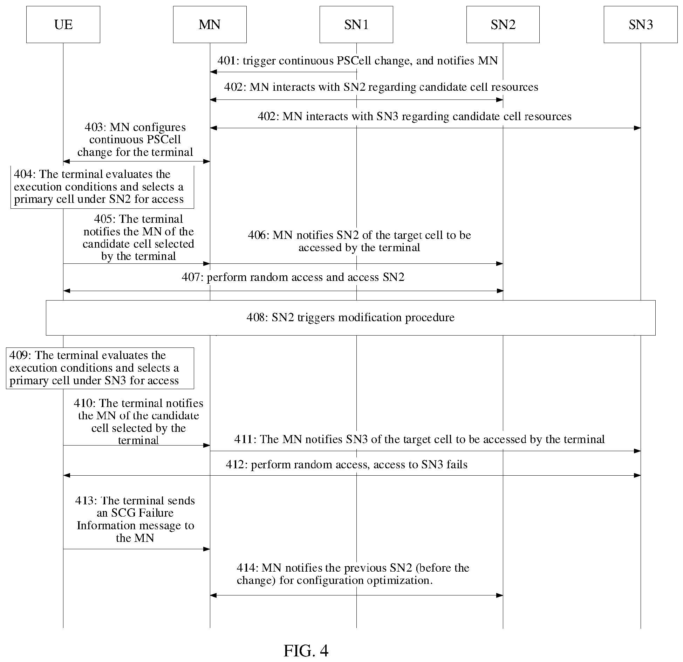

As shown in FIG. 4, the specific implementation process of Scenario II includes:
Steps 401-411: Same as steps 301-311 of Scenario I;
Step 412: Perform random access to access SN3 fails;
Step 413: Same as step 314;
Step 414: The MN notifies the previous SN2 (before the change) for configuration optimization.

It should be noted here that in the above two scenarios, analyzing the cause of the SCG failure on SN3 or the random access failure to SN3 may be due to at least one of the following:
H11. The candidate cells within SN2 and SN3 selected by SN1 in step 301 and/or the execution conditions corresponding to those candidate cells have problems;
H12. The MN may have modified the execution conditions for candidate cells, meaning the MN needs optimization;
H13. SN2 modified the candidate cells within SN3 and/or the execution conditions corresponding to those candidate cells in step 308 or step 408, meaning SN2 may need optimization;
H14. SN3 made further selection of PSCell candidate cells within the range of the PSCell candidate cell list recommended by SN1 in step 302 or step 402. SN3's selection has problems, meaning SN3 needs optimization. SN2 made further selection of PSCell candidate cells within the range of the PSCell candidate cell list recommended by SN1 in step 302 or step 402. SN2's selection has problems, meaning SN2 needs optimization.

Therefore, the current approach of only notifying SN2 and/or SN3, i.e., step 315 or step 414, cannot satisfy the scenario of continuous PSCell change.

To solve the above problem, after the MN receives the SCG FAILURE INFORMATION message, according to the existing implementation, it first sends an SCG failure information report message to the last serving SN node (SN3 in FIG. 3, SN2 in FIG. 4). It also needs to send messages to the following nodes, which may include:
H21. The SN previous to the current serving SN of the UE. In FIG. 3, it is SN2; in FIG. 4, it is SN1;
H22. When inter-SN change fails, it also needs to be sent to the target node. For example: In the scenario of FIG. 4, where the UE fails to access the PSCell under SN3 during the change process, it also needs to be sent to SN3;
H23. The node that triggered the continuous PSCell change. In FIG. 3 and FIG. 4, it is SN1;
H24. The node that triggered the update of the PSCell candidate cell list during the continuous PSCell change process. In FIG. 3, SN2 triggered the update in step 308; in FIG. 4, SN2 triggered the update in step 408;
To send messages to the above nodes, the traditional SCG failure information report message can be used, or the SCG failure transfer message, or a newly added message, involving the Xn interface.

The content of the above messages is insufficient. The information sent by the MN to the SN also needs to add at least one of the following, which can be included in the existing SCG failure information report message, or SCG failure transfer message, or other existing Xn messages, or newly added messages:
H31. Candidate cells for the continuous PSCell change and/or change execution conditions corresponding to the candidate cells for the continuous PSCell change;
That is to say, when an SCG failure occurs, it is necessary to add the currently configured candidate PSCell cell list and corresponding execution conditions for continuous PSCell change to the message.

Taking FIG. 3 and FIG. 4 as examples, it includes the configured PSCell candidate cell lists and the execution conditions corresponding to the candidate cells under SN1, SN2, and SN3.

H32. Candidate cells updated during the continuous PSCell change process and/or change execution conditions corresponding to the candidate cells updated during the continuous PSCell change process;
H33. A configuration node of change execution conditions corresponding to candidate cells for the continuous PSCell change;
It should be noted that here it is necessary to newly add, in the message, the configuration node of the execution conditions corresponding to each candidate PSCell cell list, including MN and SN;
H34. Second indication information, where the second indication information is used to indicate that continuous PSCell change was configured when an SCG failure or random access failure occurred.

In order for the MN to complete the above function of sending messages to relevant SNs, it needs to record related information. However, considering that the MN node may not know the specific cell information of the PSCell within the SN, the UE also needs to record and report at least one of the following content, which can be included in the existing SCG FAILURE INFORMATION message, or RLF report, or successful handover report, or other existing reports, or newly added reports:
H41. Cell identification information of the cell triggering the continuous PSCell change and/or identification information of the terminal within the cell triggering the continuous PSCell change;
H42. Cell identification information of the first target cell accessed by the terminal during the continuous PSCell change process and/or identification information of the terminal within the first target cell;
Specifically, the first target cell satisfies: a cell accessed by the terminal after triggering the continuous PSCell change; a cell triggering modification of candidate cells and/or modification of an execution condition corresponding to a candidate cell.

H43. Cell identification information of the second target cell and/or identification information of the terminal within the second target cell;
Specifically, the second target cell is a cell accessed by the terminal during the continuous PSCell change process.

It should be noted that this application scenario is applicable not only to continuous PSCell change scenarios, but also to scenarios of non-continuous PSCell change failure or PSCell change success followed quickly by failure in conditional PSCell change configurations.

### Application Scenario II: MN-triggered Continuous PSCell Change Scenario

It should be noted that this application scenario is similar to Application Scenario I, except that the MN directly triggers continuous PSCell change. That is, in this application scenario, step 301 does not exist in FIG. 3, and step 401 does not exist in FIG. 4. In this case, the MN itself first selects the candidate cell list and the execution conditions corresponding to the candidate cells. Other steps are the same as in FIG. 3 and FIG. 4.

After the SCG failure on SN3 or random access failure to SN3, analyzing the cause of the failure may be due to at least one of the following:
J11. The candidate cells within SN2 and SN3 selected by the MN and/or the execution conditions corresponding to those candidate cells have problems;
J12. SN2 modified the candidate cells within SN3 and/or the execution conditions corresponding to those candidate cells in step 308 or step 408, meaning SN2 may need optimization;
J13. SN3 made further selection of PSCell candidate cells within the range of the PSCell candidate cell list recommended by the MN in step 302 or step 402. SN3's selection has problems, meaning SN3 needs optimization. SN2 made further selection of PSCell candidate cells within the range of the PSCell candidate cell list recommended by the MN in step 302 or step 402. SN2's selection has problems, meaning SN2 needs optimization.

Therefore, the current approach of only notifying SN2 and SN3, i.e., step 315 or step 414, cannot satisfy the scenario of continuous PSCell change.

To solve the above problem, after the MN receives the SCG FAILURE INFORMATION message, according to the existing implementation, it first sends an SCG failure information report message to the last serving SN node (SN3 in FIG. 3, SN2 in FIG. 4). It also needs to send messages to the following nodes, which may include:
J21. The SN previous to the current serving SN of the UE. In FIG. 3, it is SN2; in FIG. 4, it is SN1;
J22. When inter-SN change fails, it also needs to be sent to the target node. For example: In the scenario of FIG. 4, where the UE fails to access the PSCell under SN3 during the change process, it also needs to be sent to SN3;
J23. The node that triggered the continuous PSCell change. In FIG. 3 and FIG. 4, it is the MN. Actually, there is no need to send a message to itself;
J24. The node that triggered the update of the PSCell candidate cell list during the continuous PSCell change process. In FIG. 3, SN2 triggered the update in step 308; in FIG. 4, SN2 triggered the update in step 408;
To send messages to the above nodes, the traditional SCG failure information report message can be used, or the SCG failure transfer message, or a newly added message, involving the Xn interface.

The content of the above messages is insufficient. The information sent by the MN to the SN also needs to add at least one of the following, which can be included in the existing SCG failure information report message, or SCG failure transfer message, or other existing Xn messages, or newly added messages:
J31. Candidate cells for the continuous PSCell change and/or change execution conditions corresponding to the candidate cells for the continuous PSCell change;
That is to say, when an SCG failure occurs, it is necessary to add the currently configured candidate PSCell cell list and corresponding execution conditions for continuous PSCell change to the message. Taking FIG. 3 and FIG. 4 as examples, it includes the configured PSCell candidate cell lists and the execution conditions corresponding to the candidate cells under SN1, SN2, and SN3.

J32. Candidate cells updated during the continuous PSCell change process and/or change execution conditions corresponding to the candidate cells updated during the continuous PSCell change process;
J33. A configuration node of change execution conditions corresponding to candidate cells for the continuous PSCell change;
It should be noted that here, because the MN triggers, the execution conditions are all configured by the MN;
J34. Second indication information, where the second indication information is used to indicate that continuous PSCell change was configured when an SCG failure or random access failure occurred.

In order for the MN to complete the above function of sending messages to relevant SNs, it needs to record related information. However, considering that the MN node may not know the specific cell information of the PSCell within the SN, the UE also needs to record and report at least one of the following content, which can be included in the existing SCG FAILURE INFORMATION message, or RLF report, or successful handover report, or other existing reports, or newly added reports:
J41. Cell identification information of the cell triggering the continuous PSCell change. In this case, it is the cell identification information of a cell under the MN;
J42. Cell identification information of the first target cell accessed by the terminal during the continuous PSCell change process;
Specifically, the first target cell satisfies: a cell accessed by the terminal after triggering the target action; a cell triggering modification of candidate cells and/or modification of an execution condition corresponding to a candidate cell.

J43. Cell identification information of the second target cell;
Specifically, the second target cell is a cell accessed by the terminal during the target action process;
It should be noted that this application scenario is applicable not only to continuous PSCell change scenarios, but also to scenarios of non-continuous PSCell change failure or PSCell change success followed quickly by failure in conditional PSCell change configurations.

### Application Scenario III: Continuous PCell Handover Scenario

A source base station triggers continuous handover from its cell, first handovering to a cell under candidate base station 1, then handovering to a cell under candidate base station 2.

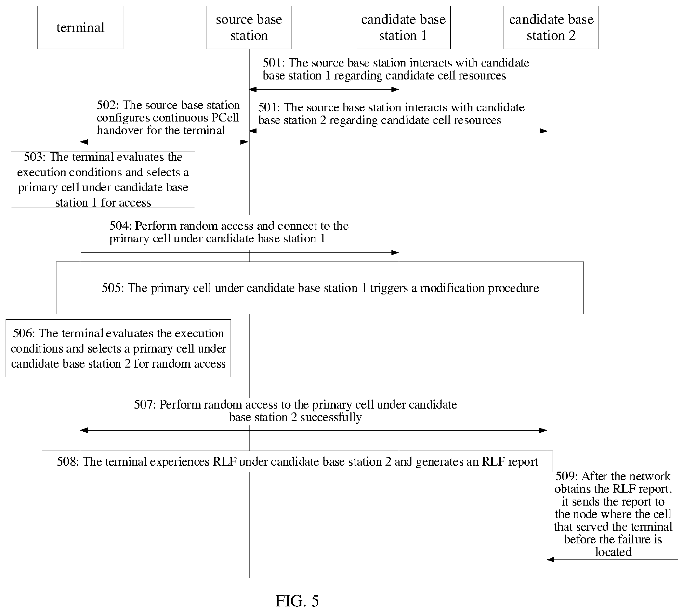

As shown in FIG. 5, the specific implementation process of Scenario I includes:
Step 501: The source base station interacts with candidate base station 1 and candidate base station 2 respectively regarding candidate cell resources;
Optionally, the implementation process includes: The source base station sends messages to candidate base station 1 and candidate base station 2. Candidate base station 1 and candidate base station 2 can accept or reject the PCell candidate cells selected by the source base station, and reply to the source base station with messages. If they accept the candidate cells selected by the source base station, they carry pre-configured candidate PCell cell configurations. If the source base station selects multiple candidate cells within candidate base station 1 or candidate base station 2, it may need to send one message to candidate base station 1 or candidate base station 2 for each candidate cell. Candidate base station 1 or candidate base station 2 also replies with multiple messages to respond for each candidate cell.

Step 502: The source base station configures continuous PCell handover for the terminal;
In some embodiments, the implementation process includes: The source base station sends an RRC connection reconfiguration message to the terminal. This message contains the PSCell candidate cell list and the execution conditions corresponding to the candidate cells. The terminal returns an RRC connection reconfiguration complete message to the source base station.

Step 503: The terminal evaluates the execution conditions and selects a primary cell under candidate base station 1 for access;
Step 504: Perform random access and connect to the primary cell under candidate base station 1;
Step 505: The primary cell under candidate base station 1 triggers a modification procedure.

For example: It may modify the candidate cell list and/or the execution conditions corresponding to candidate cells, etc.

In some embodiments, the execution process includes: Candidate base station 1 sends a handover request to candidate base station 2. Candidate base station 2 receives the handover request from candidate base station 1 and returns modified pre-configured resources to candidate base station 1. Candidate base station 1 notifies the terminal of the latest pre-configured resources.

It should be noted that this step 505 is an optional step.

Step 506: The terminal evaluates the execution conditions and selects a primary cell under candidate base station 2 for random access;
Step 507: Perform random access to the primary cell under candidate base station 2 successfully;
Step 508: The terminal experiences RLF under candidate base station 2 and generates an RLF report;
Step 509: After the network obtains the RLF report, it sends it to the node where the cell that served the terminal before the failure is located, i.e., candidate base station 2.

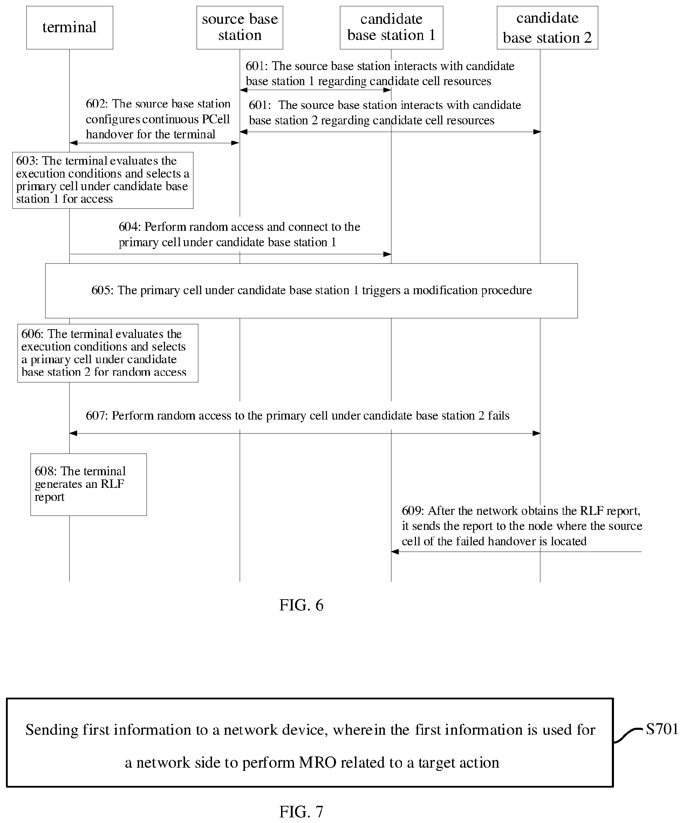

As shown in FIG. 6, the specific implementation process of Scenario II includes:
Steps 601-606: Same as steps 501-506 of Scenario I;
Step 607: Perform random access to the primary cell under candidate base station 2 fails;
Step 608: The terminal generates an RLF report;
Step 609: After the network obtains the RLF report, it sends it to the node where the source cell of the failed handover is located, i.e., candidate base station 1.

It should be noted here that in the above two scenarios, analyzing the cause of the RLF occurrence or handover failure may be due to at least one of the following:
K11. The candidate cells within candidate base station 1 and candidate base station 2 selected by the source base station in steps 501 and 601 and/or the execution conditions corresponding to those candidate cells have problems;
K12. Candidate base station 1, in steps 501 and 601, accepted or rejected the PCell candidate cells selected by the source base station. Candidate base station 1's selection has problems. For example: The source base station had already selected a suitable target cell and sent it to candidate base station 1, but candidate base station 1 rejected it, meaning candidate base station 1 needs optimization. Candidate base station 2, in step 1, accepted or rejected the PCell candidate cells selected by the source base station. Candidate base station 2's selection has problems, meaning candidate base station 2 needs optimization.

K13. Candidate base station 1 modified the candidate cells within candidate base station 2 and/or the execution conditions corresponding to those candidate cells in steps 505 or 605, meaning candidate base station 1 may need optimization.

Therefore, the current approach of only notifying candidate base station 1 or candidate base station 2 cannot satisfy the scenario of continuous PCell handover.

To solve the above problem, after the network receives the RLF report, according to the existing implementation, it first sends a failure indication message to the failure node (candidate base station 2 in FIG. 5, sent to candidate base station 1 in FIG. 6). It also needs to send messages to the following nodes, which may include:
K21. When handover fails, it needs to be sent to the node where the target cell of the handover is located, i.e., candidate base station 2 node in FIG. 6;
K22. The node that triggered the continuous handover. In FIG. 5 and FIG. 6, it is the source base station node;
K23. The node that triggered the update of the handover candidate cell list during the continuous handover process. In FIG. 5, candidate base station 1 triggered the update in step 505; in FIG. 6, candidate base station 1 triggered the update in step 605;
K24. In the scenario where handover succeeds quickly but fails soon after (scenario in FIG. 5), it also needs to be sent to the node where the source cell of the successful handover is located, i.e., sent to candidate base station 1;
To send messages to the above nodes, the traditional failure indication message can be used, or the handover report message, or uplink RAN configuration transfer or downlink RAN configuration transfer message, or a newly added message, involving the Xn or NG interface.

When network nodes receive the above messages and use the RLF report for failure cause analysis, they need information related to continuous handover. To obtain continuous handover-related information, a combined network-side and UE-side scheme or a purely UE-side scheme can be adopted.

The purely UE-side scheme involves enhancing RLF report-related content, including continuous handover-related information. It is necessary to add at least one of the following content to the RLF report or a newly added report:
K31. Cell identification information of the cell triggering the continuous PCell handover and/or identification information of the terminal within the cell triggering the continuous PCell handover;
For example, in FIG. 5 and FIG. 6, it is the cell identification and UE identification information within a cell under the source base station.

K32. Cell identification information of the first target cell accessed by the terminal during the continuous PCell handover process and/or identification information of the terminal within the first target cell;
Specifically, the first target cell satisfies: a cell accessed by the terminal after triggering the continuous PCell handover; a cell triggering modification of candidate cells and/or modification of an execution condition corresponding to a candidate cell;
K33. A candidate cell list and/or an execution condition corresponding to a candidate cell updated during the continuous PCell handover process.

K34. Cell identification information of the second target cell and/or identification information of the terminal within the second target cell;
Specifically, the second target cell is a cell accessed by the terminal during the continuous PCell handover process.

K35. First indication information, where the first indication information is used to indicate occurrence of a random access failure or radio link failure during the continuous PCell handover process.

The combined network-side and UE-side scheme involves the network recording the terminal context information for continuous handover, and the terminal recording index information in the RLF report or other reports for the network to look up. That is, it is necessary to add at least one of the following content to the RLF report or a newly added report:
K41. Cell identification information of the cell triggering the continuous PCell handover and/or identification information of the terminal within the cell triggering the continuous PCell handover;
For example, in FIG. 5 and FIG. 6, it is the cell identification and UE identification information within a cell under the source base station;
K42. Cell identification information of the first target cell accessed by the terminal during the continuous PCell handover process and/or identification information of the terminal within the first target cell;
Specifically, the first target cell satisfies: a cell accessed by the terminal after triggering the continuous PCell handover; a cell triggering modification of candidate cells and/or modification of an execution condition corresponding to a candidate cell;
K43. Cell identification information of the second target cell and/or identification information of the terminal within the second target cell;
Specifically, the second target cell is a cell accessed by the terminal during the continuous PCell handover process.

After receiving the RLF report or newly added report containing the above content, the network can, based on the cell identification and UE identification information, find the latest candidate cell list and/or corresponding execution conditions saved on the network-side node.

Therefore, using the combined network-side and UE-side scheme requires transmitting the candidate cell list and/or corresponding execution conditions between network nodes, possibly involving the Xn or NG interface. The involved inter-node messages may include at least one of the following: failure indication message, handover report message, uplink RAN configuration transfer, downlink RAN configuration transfer message, and newly added messages. To obtain the candidate cell list and/or corresponding execution conditions saved by other nodes, the sending node includes, in the above information, the cell identification information under the target node and/or the identification information of the terminal within that cell. The target node finds the saved candidate cell list and/or corresponding execution conditions according to that identification information, and then sends them back to the obtaining node in the above messages.

It should be noted that this application scenario is applicable not only to continuous handover scenarios, but also to scenarios of single handover failure or handover success followed quickly by failure in conditional handover configurations.

It should be noted that the information transmission method for continuous PSCell change and continuous PCell handover scenarios provided by embodiments of this disclosure can improve the success rate of terminal continuous PCell handover and continuous PSCell change, and improve network performance metrics.

The technical solutions provided by embodiments of this disclosure can be applied to various systems, especially 5G systems. For example, applicable systems can be Global System for Mobile communications (GSM) system, Code Division Multiple Access (CDMA) system, Wideband Code Division Multiple Access (WCDMA) system, General Packet Radio Service (GPRS) system, Long Term Evolution (LTE) system, LTE Frequency Division Duplex (FDD) system, LTE Time Division Duplex (TDD) system, Long Term Evolution Advanced (LTE-A) system, Universal Mobile Telecommunications System (UMTS), Worldwide Interoperability for Microwave Access (WiMAX) system, 5th Generation (5G) New Radio (NR) system, etc. These various systems all include terminals (also called terminal devices) and network devices. The system may also include a core network part, such as Evolved Packet System (EPS), 5G System (5GS), etc.

The terminal involved in embodiments of this disclosure, also called a terminal device, can refer to a device that provides voice and/or data connectivity to a user, a handheld device with wireless connection function, or other processing device connected to a wireless modem. In different systems, the name of the terminal device may also be different. For example, in a 5G system, the terminal device can be called User Equipment (UE). A wireless terminal device can communicate with one or more core networks via a Radio Access Network (RAN). The wireless terminal device can be a mobile terminal device, such as a mobile phone (or called "cellular" phone) and a computer with a mobile terminal device. For example, it can be a portable, pocket-sized, handheld, computer-integrated, or vehicle-mounted mobile device that exchanges language and/or data with the wireless access network. For example, Personal Communication Service (PCS) phone, cordless telephone, Session Initiated Protocol (SIP) phone, Wireless Local Loop (WLL) station, Personal Digital Assistant (PDA), etc. A wireless terminal device can also be called a system, subscriber unit, subscriber station, mobile station, mobile, remote station, access point, remote terminal, access terminal, user terminal, user agent, user device, which is not limited in embodiments of this disclosure.

The network device involved in embodiments of this disclosure can be a base station, which can include multiple cells serving terminals. Depending on the specific application scenario, the base station can also be called an access point, or can be a device in the access network that communicates with wireless terminal devices via one or more sectors over the air interface, or other names. The network device can be used to convert received air frames to/from Internet Protocol (IP) packets, and act as a router between the wireless terminal device and the rest of the access network, where the rest of the access network can include an IP communication network. The network device can also coordinate attribute management of the air interface. For example, the network device involved in embodiments of this disclosure can be a network device (Base Transceiver Station, BTS) in GSM or CDMA, or can be a network device (NodeB) in WCDMA, or can be an evolved network device (evolutional Node B, eNB or e-NodeB) in an LTE system, or a 5G base station (gNB) in a 5G network architecture (next generation system), or can be a Home evolved Node B (HeNB), a relay node, a femto base station, a pico base station, etc., which is not limited in embodiments of this disclosure. In some network architectures, the network device can include a Centralized Unit (CU) node and a Distributed Unit (DU) node, and the centralized unit and distributed unit can also be geographically separately deployed.

The network device and the terminal device can each use one or more antennas for Multi Input Multi Output (MIMO) transmission. MIMO transmission can be Single User MIMO (SU-MIMO) or Multi User MIMO (MU-MIMO). According to the form and quantity of antenna combination, MIMO transmission can be 2D-MIMO, 3D-MIMO, Full Dimension MIMO (FD-MIMO), or massive-MIMO, or can be diversity transmission, precoding transmission, or beamforming transmission, etc.

As shown in FIG. 7, an embodiment of this disclosure provides an information transmission method, performed by a terminal, comprising:
Step S701: Send first information to a network device, where the first information is used for a network side to perform mobility robustness optimization (MRO) related to a target action;
wherein the first information is used to indicate information related to the target action;
the target action comprises:
   continuous primary cell of a secondary cell group (PSCell) change, where the continuous PSCell change is at least one PSCell change performed by the terminal based on candidate cells under at least one secondary cell group (SCG) and a change execution condition corresponding to each candidate cell; or
   continuous special cell of a master cell group (PCell) handover, where the continuous PCell handover is at least one PCell handover performed by the terminal based on candidate cells under at least one master cell group (MCG) and a handover execution condition corresponding to each candidate cell.

In some embodiments, the first information comprises at least one of the following:
cell identification information, where a cell indicated by the cell identification information is a cell triggering the target action;
identification information of the terminal within the cell triggering the target action;
cell identification information of a first target cell accessed by the terminal during the target action process, where the first target cell satisfies: a cell accessed by the terminal after triggering the target action; a cell triggering modification of candidate cells and/or modification of an execution condition corresponding to a candidate cell;
identification information of the terminal within the accessed first target cell during the execution of the target action process;
first indication information, where the first indication information is used to indicate occurrence of a secondary cell group (SCG) failure, a random access failure, or a radio link failure (RLF) during the target action process;
cell identification information of a second target cell, where the second target cell is a cell accessed by the terminal during the target action process;
identification information of the terminal within the second target cell;
a candidate cell list and/or an execution condition corresponding to a candidate cell updated during the target action process;
a candidate cell list and/or an execution condition corresponding to a candidate cell configured before the target action.

In some embodiments, the sending first information to a network device comprises:
sending a first target message to the network device, where the first target message carries the first information;
wherein the first target message comprises at least one of the following:
a secondary cell group (SCG) failure message;
a radio link failure (RLF) report;
a successful handover report;
another report other than an RLF report and a successful handover report.

It should be noted that all implementations in the above embodiments are applicable to this information transmission method embodiment applied to the terminal side, and can also achieve the same technical effects, which are not repeated here.

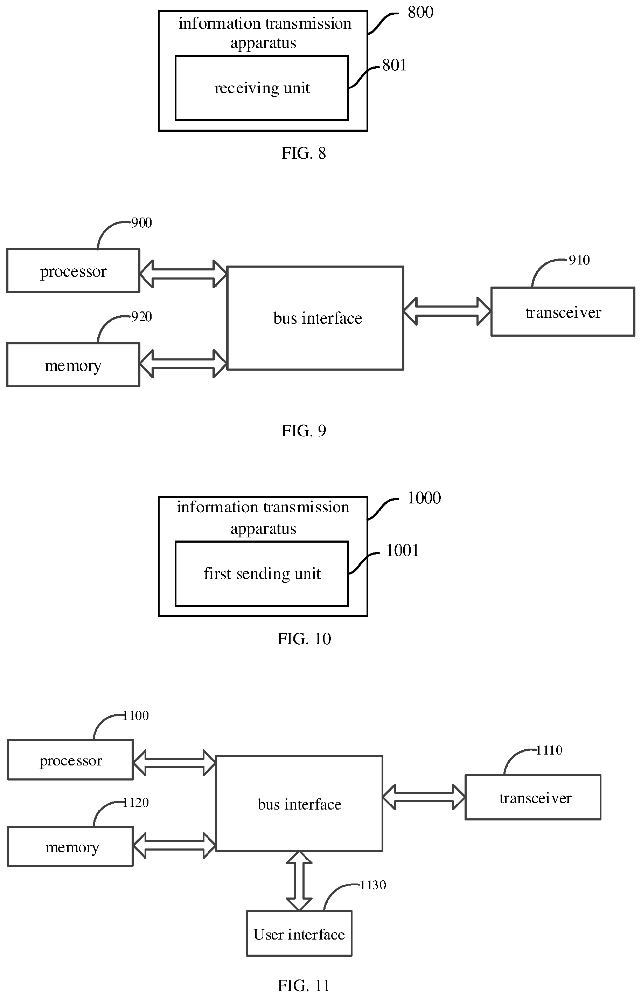

As shown in FIG. 8, an embodiment of this disclosure provides an information transmission apparatus 800, applied to a network device, comprising:
a receiving unit 801, configured to receive first information sent by a terminal, where the first information is used to assist a network side in performing mobility robustness optimization (MRO) related to a target action; and perform MRO related to the target action according to the first information;
wherein the first information is used to indicate information related to the target action;
the target action comprises:
   continuous primary cell of a secondary cell group (PSCell) change, where the continuous PSCell change is at least one PSCell change performed by the terminal based on candidate cells under at least one secondary cell group (SCG) and a change execution condition corresponding to each candidate cell; or
   continuous special cell of a master cell group (PCell) handover, where the continuous PCell handover is at least one PCell handover performed by the terminal based on candidate cells under at least one master cell group (MCG) and a handover execution condition corresponding to each candidate cell.

In some embodiments, the first information comprises at least one of the following:
cell identification information, where a cell indicated by the cell identification information is a cell triggering the target action;
identification information of the terminal within the cell triggering the target action;
cell identification information of a first target cell accessed by the terminal during the target action process, where the first target cell satisfies: a cell accessed by the terminal after triggering the target action; a cell triggering modification of candidate cells and/or modification of an execution condition corresponding to a candidate cell;
identification information of the terminal within the accessed first target cell during the execution of the target action process;
first indication information, where the first indication information is used to indicate occurrence of a secondary cell group (SCG) failure, a random access failure, or a radio link failure (RLF) during the target action process;
cell identification information of a second target cell, where the second target cell is a cell accessed by the terminal during the target action process;
identification information of the terminal within the second target cell;
a candidate cell list and/or an execution condition corresponding to a candidate cell updated during the target action process;
a candidate cell list and/or an execution condition corresponding to a candidate cell configured before the target action.

In some embodiments, the receiving first information sent by a terminal comprises:
receiving a first target message sent by the terminal, where the first target message carries the first information;
wherein the first target message comprises at least one of the following:
   a secondary cell group (SCG) failure message;
   a radio link failure (RLF) report;
   a successful handover report;
   another report other than an RLF report and a successful handover report.

In some embodiments, the apparatus further comprises:
a second sending unit, configured to send second information to a target node, where the second information comprises the first information, and the second information is used for the target node to perform MRO.

In some embodiments, the second sending unit is configured to:
send a second target message to a target node, where the second target message carries the second information;
wherein the second target message comprises at least one of the following:
   an SCG failure information report message;
   an SCG failure transfer message;
   another Inter-Node (e.g., Xn) interface message other than an SCG failure information report message and an SCG failure transfer message;
   a failure indication message;
   a handover report message;
   an uplink RAN configuration transfer message;
   a downlink RAN configuration transfer message;
   another Inter-Node (e.g., Xn or NG) interface message other than a failure indication message, a handover report message, an uplink RAN configuration transfer message, and a downlink RAN configuration transfer message.

In some embodiments, in a case where the target action is continuous PSCell change, the target node comprises at least one of the following:
a node triggering the continuous PSCell change;
a node triggering update of a candidate cell list for PSCell during the continuous PSCell change process;
a first Secondary Node (SN), where the first SN is an SN connected by the terminal before changing to a second SN, and the second SN is an SN that the terminal has accessed and that provides service to the terminal;
a target node when Secondary Node change fails.

In some embodiments, in a case where the target action is continuous PCell handover, the target node comprises at least one of the following:
a node triggering the continuous PCell handover;
a node triggering update of a candidate cell list during the continuous PCell handover process;
a node where a target cell of the handover is located;
a node where a source cell of a successful handover is located.

In some embodiments, in a case where the target action is continuous PSCell change, the second information further comprises at least one of the following:
candidate cells for the continuous PSCell change and/or change execution conditions corresponding to the candidate cells for the continuous PSCell change;
candidate cells updated during the continuous PSCell change process and/or change execution conditions corresponding to the candidate cells updated during the continuous PSCell change process;
a configuration node of change execution conditions corresponding to candidate cells for the continuous PSCell change;
second indication information, where the second indication information is used to indicate that continuous PSCell change was configured when an SCG failure or random access failure occurred.

It should be noted that this apparatus embodiment is a one-to-one corresponding apparatus with the above method embodiments. All implementations in the above method embodiments are applicable to this apparatus embodiment, and can also achieve the same technical effects.

It should be noted that the division of units in the embodiments of this disclosure is schematic, and is only a division of logical functions. In actual implementation, there may be another division manner. In addition, each functional unit in each embodiment of this disclosure may be integrated into one processing unit, or each unit may exist physically separately, or two or more units may be integrated into one unit. The above integrated units may be implemented in the form of hardware or software functional units.

If the integrated unit is implemented in the form of a software functional unit and sold or used as an independent product, it may be stored in a processor-readable storage medium. Based on such understanding, the technical solution of this disclosure essentially, or the part contributing to the related art, or all or part of the technical solution may be embodied in the form of a software product. The computer software product is stored in a storage medium and includes several instructions for causing a computer device (which may be a personal computer, a server, a network device, etc.) or a processor to perform all or part of the steps of the methods described in the various embodiments of this disclosure. The foregoing storage medium includes: U disk, mobile hard disk, Read-Only Memory (ROM), Random Access Memory (RAM), magnetic disk, or optical disk, and other various media that can store program code.

As shown in FIG. 9, an embodiment of this disclosure also provides a network device, comprising a processor 900, a transceiver 910, a memory 920, and a program stored in the memory 920 and executable on the processor 900. The transceiver 910 is connected to the processor 900 and the memory 920 via a bus interface. The processor 900 is configured to read the program in the memory and perform the following process:
receiving, via the transceiver, first information sent by a terminal, where the first information is used to assist a network side in performing mobility robustness optimization (MRO) related to a target action; and performing MRO related to the target action according to the first information;
wherein the first information is used to indicate information related to the target action;
the target action comprises:
   continuous primary cell of a secondary cell group (PSCell) change, where the continuous PSCell change is at least one PSCell change performed by the terminal based on candidate cells under at least one secondary cell group (SCG) and a change execution condition corresponding to each candidate cell; or
   continuous special cell of a master cell group (PCell) handover, where the continuous PCell handover is at least one PCell handover performed by the terminal based on candidate cells under at least one master cell group (MCG) and a handover execution condition corresponding to each candidate cell.

The transceiver 910 is configured to transmit and receive data under control of the processor 900.

In FIG. 9, the bus architecture may include any number of interconnected buses and bridges, specifically linking together various circuits represented by one or more processors represented by the processor 900 and a memory represented by the memory 920. The bus architecture may also link together various other circuits such as peripheral devices, voltage regulators, and power management circuits, which are well known in the art and therefore will not be further described herein. The bus interface provides an interface. The transceiver 910 may be multiple elements, i.e., including a transmitter and a receiver, providing units for communicating with various other apparatuses over transmission media, which include wireless channels, wired channels, optical cables, etc.

The processor 900 is responsible for managing the bus architecture and general processing, and the memory 920 may store data used by the processor 900 when performing operations.

Optionally, the processor 900 may be a Central Processing Unit (CPU), an Application Specific Integrated Circuit (ASIC), a Field-Programmable Gate Array (FPGA), or a Complex Programmable Logic Device (CPLD). The processor may also adopt a multi-core architecture.

The processor executes the computer program stored in the memory to perform the methods provided by any embodiment of this disclosure according to the obtained executable instructions. The processor and the memory may also be physically arranged separately.

In some embodiments, the first information comprises at least one of the following:
cell identification information, where a cell indicated by the cell identification information is a cell triggering the target action;
identification information of the terminal within the cell triggering the target action;
cell identification information of a first target cell accessed by the terminal during the target action process, where the first target cell satisfies: a cell accessed by the terminal after triggering the target action; a cell triggering modification of candidate cells and/or modification of an execution condition corresponding to a candidate cell;
identification information of the terminal within the accessed first target cell during the execution of the target action process;
first indication information, where the first indication information is used to indicate occurrence of a secondary cell group (SCG) failure, a random access failure, or a radio link failure (RLF) during the target action process;
cell identification information of a second target cell, where the second target cell is a cell accessed by the terminal during the target action process;
identification information of the terminal within the second target cell;
a candidate cell list and/or an execution condition corresponding to a candidate cell updated during the target action process;
a candidate cell list and/or an execution condition corresponding to a candidate cell configured before the target action.

In some embodiments, the processor is configured to read the computer program in the memory and perform the following operation:
receiving, via the transceiver, a first target message sent by the terminal, where the first target message carries the first information;
wherein the first target message comprises at least one of the following:
   a secondary cell group (SCG) failure message;
   a radio link failure (RLF) report;
   a successful handover report;
   another report other than an RLF report and a successful handover report.

In some embodiments, the processor is configured to read the computer program in the memory and further perform the following operation:
sending, via the transceiver, second information to a target node, where the second information comprises the first information, and the second information is used for the target node to perform MRO.

In some embodiments, the processor is configured to read the computer program in the memory and perform the following operation:
sending, via the transceiver, a second target message to a target node, where the second target message carries the second information;
wherein the second target message comprises at least one of the following:
   an SCG failure information report message;
   an SCG failure transfer message;
   another Inter-Node (e.g., Xn) interface message other than an SCG failure information report message and an SCG failure transfer message;
   a failure indication message;
   a handover report message;
   an uplink RAN configuration transfer message;
   a downlink RAN configuration transfer message;
   another Inter-Node (e.g., Xn or NG) interface message other than a failure indication message, a handover report message, an uplink RAN configuration transfer message, and a downlink RAN configuration transfer message.

In some embodiments, in a case where the target action is continuous PSCell change, the target node comprises at least one of the following:
a node triggering the continuous PSCell change;
a node triggering update of a candidate cell list for PSCell during the continuous PSCell change process;
a first Secondary Node (SN), where the first SN is an SN connected by the terminal before changing to a second SN, and the second SN is an SN that the terminal has accessed and that provides service to the terminal;
a target node when Secondary Node change fails.

In some embodiments, in a case where the target action is continuous PCell handover, the target node comprises at least one of the following:
a node triggering the continuous PCell handover;
a node triggering update of a candidate cell list during the continuous PCell handover process;
a node where a target cell of the handover is located;
a node where a source cell of a successful handover is located.

In some embodiments, in a case where the target action is continuous PSCell change, the second information further comprises at least one of the following:
candidate cells for the continuous PSCell change and/or change execution conditions corresponding to the candidate cells for the continuous PSCell change;
candidate cells updated during the continuous PSCell change process and/or change execution conditions corresponding to the candidate cells updated during the continuous PSCell change process;
a configuration node of change execution conditions corresponding to candidate cells for the continuous PSCell change;
second indication information, where the second indication information is used to indicate that continuous PSCell change was configured when an SCG failure or random access failure occurred.

It should be noted that the network device provided by this embodiment can implement all method steps implemented by the above method embodiments and achieve the same technical effects. Details and beneficial effects of parts identical to those in the method embodiments are not repeated herein.

An embodiment of this disclosure also provides a computer-readable storage medium storing a computer program, where the computer program, when executed by a processor, implements the steps of the information transmission method applied to a network device. The processor-readable storage medium may be any available medium or data storage device that the processor can access, including but not limited to magnetic memory (e.g., floppy disk, hard disk, magnetic tape, Magneto Optical (MO) disk, etc.), optical memory (e.g., Compact Disc (CD), Digital Video Disc (DVD), Blu-ray Disc (BD), High-definition Versatile Disc (HVD), etc.), and semiconductor memory (e.g., ROM, Erasable Programmable Read-Only Memory (EPROM), Electrically Erasable Programmable Read-Only Memory (EEPROM), non-volatile memory (NAND FLASH), Solid State Drive (SSD), etc.).

As shown in FIG. 10, an embodiment of this disclosure provides an information transmission apparatus 1000, applied to a terminal, comprising:
a first sending unit 1001, configured to send first information to a network device, where the first information is used for a network side to perform mobility robustness optimization (MRO) related to a target action;
wherein the first information is used to indicate information related to the target action;
the target action comprises:
   continuous primary cell of a secondary cell group (PSCell) change, where the continuous PSCell change is at least one PSCell change performed by the terminal based on candidate cells under at least one secondary cell group (SCG) and a change execution condition corresponding to each candidate cell; or
   continuous special cell of a master cell group (PCell) handover, where the continuous PCell handover is at least one PCell handover performed by the terminal based on candidate cells under at least one master cell group (MCG) and a handover execution condition corresponding to each candidate cell.

In some embodiments, the first information comprises at least one of the following:
cell identification information, where a cell indicated by the cell identification information is a cell triggering the target action;
identification information of the terminal within the cell triggering the target action;
cell identification information of a first target cell accessed by the terminal during the target action process, where the first target cell satisfies: a cell accessed by the terminal after triggering the target action; a cell triggering modification of candidate cells and/or modification of an execution condition corresponding to a candidate cell;
identification information of the terminal within the accessed first target cell during the execution of the target action process;
first indication information, where the first indication information is used to indicate occurrence of a secondary cell group (SCG) failure, a random access failure, or a radio link failure (RLF) during the target action process;
cell identification information of a second target cell, where the second target cell is a cell accessed by the terminal during the target action process;
identification information of the terminal within the second target cell;
a candidate cell list and/or an execution condition corresponding to a candidate cell updated during the target action process;
a candidate cell list and/or an execution condition corresponding to a candidate cell configured before the target action.

In some embodiments, the sending first information to a network device comprises:
sending a first target message to the network device, where the first target message carries the first information;
wherein the first target message comprises at least one of the following:
   a secondary cell group (SCG) failure message;
   a radio link failure (RLF) report;
   a successful handover report;
   another report other than an RLF report and a successful handover report.

It should be noted that this apparatus embodiment is a one-to-one corresponding apparatus with the above method embodiments. All implementations in the above method embodiments are applicable to this apparatus embodiment, and can also achieve the same technical effects.

It should be noted that the division of units in the embodiments of this disclosure is schematic, and is only a division of logical functions. In actual implementation, there may be another division manner. In addition, each functional unit in each embodiment of this disclosure may be integrated into one processing unit, or each unit may exist physically separately, or two or more units may be integrated into one unit. The above integrated units may be implemented in the form of hardware or software functional units.

If the integrated unit is implemented in the form of a software functional unit and sold or used as an independent product, it may be stored in a processor-readable storage medium. Based on such understanding, the technical solution of this disclosure essentially, or the part contributing to the related art, or all or part of the technical solution may be embodied in the form of a software product. The computer software product is stored in a storage medium and includes several instructions for causing a computer device (which may be a personal computer, a server, a network device, etc.) or a processor to perform all or part of the steps of the methods described in the various embodiments of this disclosure. The foregoing storage medium includes: U disk, mobile hard disk, Read-Only Memory (ROM), Random Access Memory (RAM), magnetic disk, or optical disk, and other various media that can store program code.

As shown in FIG. 11, an embodiment of this disclosure also provides a terminal, comprising a processor 1100, a transceiver 1110, a memory 1120, and a program stored in the memory 1120 and executable on the processor 1100. The transceiver 1110 is connected to the processor 1100 and the memory 1120 via a bus interface. The processor 1100 is configured to read the program in the memory and perform the following process:
sending first information to a network device, where the first information is used for a network side to perform mobility robustness optimization (MRO) related to a target action;
wherein the first information is used to indicate information related to the target action;
the target action comprises:
   continuous primary cell of a secondary cell group (PSCell) change, where the continuous PSCell change is at least one PSCell change performed by the terminal based on candidate cells under at least one secondary cell group (SCG) and a change execution condition corresponding to each candidate cell; or
   continuous special cell of a master cell group (PCell) handover, where the continuous PCell handover is at least one PCell handover performed by the terminal based on candidate cells under at least one master cell group (MCG) and a handover execution condition corresponding to each candidate cell.

The transceiver 1110 is configured to transmit and receive data under control of the processor 1100.

In FIG. 11, the bus architecture may include any number of interconnected buses and bridges, specifically linking together various circuits represented by one or more processors represented by the processor 1100 and a memory represented by the memory 1120. The bus architecture may also link together various other circuits such as peripheral devices, voltage regulators, and power management circuits, which are well known in the art and therefore will not be further described herein. The bus interface provides an interface. The transceiver 1110 may be multiple elements, i.e., including a transmitter and a receiver, providing units for communicating with various other apparatuses over transmission media, which include wireless channels, wired channels, optical cables, etc. For different user equipment, the user interface 1130 may also be an interface that can externally or internally connect needed devices. The connected devices include but are not limited to a keypad, display, speaker, microphone, joystick, etc.

The processor 1100 is responsible for managing the bus architecture and general processing, and the memory 1120 may store data used by the processor 1100 when performing operations.

Optionally, the processor 1100 may be a Central Processing Unit (CPU), an Application Specific Integrated Circuit (ASIC), a Field-Programmable Gate Array (FPGA), or a Complex Programmable Logic Device (CPLD). The processor may also adopt a multi-core architecture.

The processor executes the computer program stored in the memory to perform the methods provided by any embodiment of this disclosure according to the obtained executable instructions. The processor and the memory may also be physically arranged separately.

In some embodiments, the first information comprises at least one of the following:
cell identification information, where a cell indicated by the cell identification information is a cell triggering the target action;
identification information of the terminal within the cell triggering the target action;
cell identification information of a first target cell accessed by the terminal during the target action process, where the first target cell satisfies: a cell accessed by the terminal after triggering the target action; a cell triggering modification of candidate cells and/or modification of an execution condition corresponding to a candidate cell;
identification information of the terminal within the accessed first target cell during the execution of the target action process;
first indication information, where the first indication information is used to indicate occurrence of a secondary cell group (SCG) failure, a random access failure, or a radio link failure (RLF) during the target action process;
cell identification information of a second target cell, where the second target cell is a cell accessed by the terminal during the target action process;
identification information of the terminal within the second target cell;
a candidate cell list and/or an execution condition corresponding to a candidate cell updated during the target action process;
a candidate cell list and/or an execution condition corresponding to a candidate cell configured before the target action.

In some embodiments, the processor is configured to read the computer program in the memory and perform the following operation:
sending, via the transceiver, a first target message to the network device, where the first target message carries the first information;
wherein the first target message comprises at least one of the following: an SCG failure message; an RLF report; a successful handover report; another report other than an RLF report and a successful handover report.

It should be noted that the terminal provided by this embodiment can implement all method steps implemented by the above method embodiments and achieve the same technical effects. Details and beneficial effects of parts identical to those in the method embodiments are not repeated herein.

An embodiment of this disclosure also provides a computer-readable storage medium storing a computer program, where the computer program, when executed by a processor, implements the steps of the information transmission method applied to a terminal. The processor-readable storage medium may be any available medium or data storage device that the processor can access, including but not limited to magnetic memory (e.g., floppy disk, hard disk, magnetic tape, Magneto Optical (MO) disk, etc.), optical memory (e.g., Compact Disc (CD), Digital Video Disc (DVD), Blu-ray Disc (BD), High-definition Versatile Disc (HVD), etc.), and semiconductor memory (e.g., ROM, Erasable Programmable Read-Only Memory (EPROM), Electrically Erasable Programmable Read-Only Memory (EEPROM), non-volatile memory (NAND FLASH), Solid State Drive (SSD), etc.).

Those skilled in the art will appreciate that the embodiments of this disclosure may be provided as a method, a system, or a computer program product. Therefore, this disclosure may take the form of an entirely hardware embodiment, an entirely software embodiment, or an embodiment combining software and hardware aspects. Moreover, this disclosure may take the form of a computer program product implemented on one or more computer-usable storage media (including but not limited to disk storage, optical storage, etc.) having computer-usable program code embodied therein.

This disclosure is described with reference to flowchart illustrations and/or block diagrams of methods, apparatuses (systems), and computer program products according to embodiments of this disclosure. It will be understood that each flow and/or block of the flowchart illustrations and/or block diagrams, and combinations of flows and/or blocks in the flowchart illustrations and/or block diagrams, can be implemented by computer program instructions. These computer program instructions may be provided to a processor of a general-purpose computer, special-purpose computer, embedded processor, or other programmable data processing apparatus to produce a machine, such that the instructions, which execute via the processor of the computer or other programmable data processing apparatus, create means for implementing the functions specified in one or more flows of the flowchart and/or one or more blocks of the block diagram.

These computer program instructions may also be stored in a processor-readable memory that can direct a computer or other programmable data processing apparatus to function in a particular manner, such that the instructions stored in the processor-readable memory produce an article of manufacture including instruction means which implement the function specified in one or more flows of the flowchart and/or one or more blocks of the block diagram.

These computer program instructions may also be loaded onto a computer or other programmable data processing apparatus to cause a series of operational steps to be performed on the computer or other programmable apparatus to produce a computer implemented process, such that the instructions which execute on the computer or other programmable apparatus provide steps for implementing the functions specified in one or more flows of the flowchart and/or one or more blocks of the block diagram.

It should be understood that the division of each module is merely a division of logical functions. In actual implementation, they may be fully or partially integrated into one physical entity, or may be physically separate. Moreover, these modules may be fully implemented in software called by processing elements; may be fully implemented in hardware; or some modules may be implemented in software called by processing elements, and some modules may be implemented in hardware. For example, the determining module may be a separately established processing element, or may be integrated into a chip of the above-mentioned apparatus for implementation. In addition, it may also be stored in the memory of the above-mentioned apparatus in the form of program code, and called and executed by a processing element of the above-mentioned apparatus to implement the function of the determining module. The implementation of other modules is similar. In addition, these modules may be fully or partially integrated, or may be implemented independently. The processing element mentioned here may be an integrated circuit with signal processing capabilities. In the implementation process, each step of the above method or each module above may be completed by an integrated logic circuit of hardware in a processor element or instructions in a software form.

For example, each module, unit, sub-unit, or sub-module may be one or more integrated circuits configured to implement the above method, such as: one or more Application Specific Integrated Circuits (ASICs), or one or more Digital Signal Processors (DSPs), or one or more Field Programmable Gate Arrays (FPGAs), etc. For another example, when a certain module is implemented in the form of a processing element calling program code, the processing element may be a general-purpose processor, such as a Central Processing Unit (CPU) or other processors that can call program code. For yet another example, these modules may be integrated together and implemented in the form of a System-on-a-Chip (SOC).

The terms "first", "second", etc. in the specification and claims of this disclosure are used to distinguish similar objects, and are not necessarily used to describe a specific order or sequence. It should be understood that the data used in this way may be interchangeable under appropriate circumstances, so that the embodiments of this disclosure described herein can be implemented in an order other than those illustrated or described herein. In addition, the terms "comprise", "have" and any variations thereof are intended to cover non-exclusive inclusion. For example, a process, method, system, product, or device that includes a series of steps or units is not necessarily limited to those clearly listed steps or units, but may include other steps or units not clearly listed or inherent to these processes, methods, products, or devices. In addition, the use of "and/or" in the specification and claims indicates at least one of the connected objects, for example, A and/or B and/or C, indicates seven cases: A alone, B alone, C alone, both A and B exist, both B and C exist, both A and C exist, and A, B, and C all exist. Similarly, the use of "at least one of A and B" in this specification and claims should be understood as "A alone, B alone, or both A and B exist".

Obviously, those skilled in the art can make various modifications and variations to this disclosure without departing from the spirit and scope of this disclosure. Thus, if these modifications and variations of this disclosure fall within the scope of the claims of this disclosure and their equivalent technologies, this disclosure is also intended to cover these modifications and variations.

## Claims

1. An information transmission method, performed by a network device, comprising:
receiving first information sent by a terminal, the first information being used to assist a network side in performing mobility robustness optimization (MRO) related to a target action;
performing MRO related to the target action according to the first information;
wherein the first information is used to indicate information related to the target action;
the target action comprises:
continuous primary cell of a secondary cell group (PSCell) change, the continuous PSCell change being at least one PSCell change performed by the terminal based on candidate cells under at least one secondary cell group (SCG) and a change execution condition corresponding to each candidate cell; or
continuous special cell of a master cell group (PCell) handover, the continuous PCell handover being at least one PCell handover performed by the terminal based on candidate cells under at least one master cell group (MCG) and a handover execution condition corresponding to each candidate cell.

2. The method according to claim 1, wherein the first information comprises at least one of the following:
cell identification information, a cell indicated by the cell identification information being a cell triggering the target action;
identification information of the terminal within the cell triggering the target action;
cell identification information of a first target cell accessed by the terminal during the target action process, the first target cell satisfying: a cell accessed by the terminal after triggering the target action; a cell triggering modification of candidate cells and/or modification of an execution condition corresponding to a candidate cell;
identification information of the terminal within the accessed first target cell during the execution of the target action process;
first indication information, the first indication information being used to indicate occurrence of a SCG failure, a random access failure, or a radio link failure (RLF) during the target action process;
cell identification information of a second target cell, the second target cell being a cell accessed by the terminal during the target action process;
identification information of the terminal within the second target cell;
a candidate cell list and/or an execution condition corresponding to a candidate cell updated during the target action process;
a candidate cell list and/or an execution condition corresponding to a candidate cell configured before the target action.

3. The method according to claim 1, wherein the receiving first information sent by a terminal comprises:
receiving a first target message sent by the terminal, the first target message carrying the first information;
wherein the first target message comprises at least one of the following:
a SCG failure message;
a RLF report;
a successful handover report;
another report other than an RLF report and a successful handover report.

4. The method according to any one of claims 1 to 3, further comprising:
sending second information to a target node, the second information comprising the first information, the second information being used for the target node to perform MRO.

5. The method according to claim 4, wherein the sending second information to a target node comprises:
sending a second target message to a target node, the second target message carrying the second information;
wherein the second target message comprises at least one of the following:
an SCG failure information report message;
an SCG failure transfer message;
another Inter-Node interface message other than an SCG failure information report message and an SCG failure transfer message;
a failure indication message;
a handover report message;
an uplink RAN configuration transfer message;
a downlink RAN configuration transfer message;
another Inter-Node interface message other than a failure indication message, a handover report message, an uplink RAN configuration transfer message, and a downlink RAN configuration transfer message.

6. The method according to claim 4, wherein, in a case where the target action is continuous PSCell change, the target node comprises at least one of the following:
a node triggering the continuous PSCell change;
a node triggering update of a candidate cell list for PSCell during the continuous PSCell change process;
a first Secondary Node (SN), the first SN being an SN connected by the terminal before changing to a second SN, and the second SN being an SN that the terminal has accessed and that provides service to the terminal;
a target node when Secondary Node change fails.

7. The method according to claim 4, wherein, in a case where the target action is continuous PCell handover, the target node comprises at least one of the following:
a node triggering the continuous PCell handover;
a node triggering update of a candidate cell list during the continuous PCell handover process;
a node where a target cell of the handover is located;
a node where a source cell of a successful handover is located.

8. The method according to claim 4, wherein, in a case where the target action is continuous PSCell change, the second information further comprises at least one of the following:
candidate cells for the continuous PSCell change and/or change execution conditions corresponding to the candidate cells for the continuous PSCell change;
candidate cells updated during the continuous PSCell change process and/or change execution conditions corresponding to the candidate cells updated during the continuous PSCell change process;
a configuration node of change execution conditions corresponding to candidate cells for the continuous PSCell change;
second indication information, the second indication information being used to indicate that continuous PSCell change was configured when an SCG failure or random access failure occurred.

9. An information transmission method, performed by a terminal, comprising:
sending first information to a network device, the first information being used for a network side to perform mobility robustness optimization (MRO) related to a target action;
wherein the first information is used to indicate information related to the target action;
the target action comprises:
continuous primary cell of a secondary cell group (PSCell) change, the continuous PSCell change being at least one PSCell change performed by the terminal based on candidate cells under at least one secondary cell group (SCG) and a change execution condition corresponding to each candidate cell; or
continuous special cell of a master cell group (PCell) handover, the continuous PCell handover being at least one PCell handover performed by the terminal based on candidate cells under at least one master cell group (MCG) and a handover execution condition corresponding to each candidate cell.

10. The method according to claim 9, wherein the first information comprises at least one of the following:
cell identification information, a cell indicated by the cell identification information being a cell triggering the target action;
identification information of the terminal within the cell triggering the target action;
cell identification information of a first target cell accessed by the terminal during the target action process, the first target cell satisfying: a cell accessed by the terminal after triggering the target action; a cell triggering modification of candidate cells and/or modification of an execution condition corresponding to a candidate cell;
identification information of the terminal within the accessed first target cell during the execution of the target action process;
first indication information, the first indication information being used to indicate occurrence of a SCG failure, a random access failure, or a radio link failure (RLF) during the target action process;
cell identification information of a second target cell, the second target cell being a cell accessed by the terminal during the target action process;
identification information of the terminal within the second target cell;
a candidate cell list and/or an execution condition corresponding to a candidate cell updated during the target action process;
a candidate cell list and/or an execution condition corresponding to a candidate cell configured before the target action.

11. The method according to claim 9 or 10, wherein the sending first information to a network device comprises:
sending a first target message to the network device, the first target message carrying the first information;
wherein the first target message comprises at least one of the following:
a SCG failure message;
a RLF report;
a successful handover report;
another report other than an RLF report and a successful handover report.

12. A network device, comprising a memory, a transceiver, and a processor:
the memory is configured to store a computer program; the transceiver is configured to transmit and receive data under control of the processor; the processor is configured to read the computer program in the memory and perform the following steps:
receiving, via the transceiver, first information sent by a terminal, the first information being used to assist a network side in performing mobility robustness optimization (MRO) related to a target action; performing MRO related to the target action according to the first information;
wherein the first information is used to indicate information related to the target action;
the target action comprises:
continuous primary cell of a secondary cell group (PSCell) change, the continuous PSCell change being at least one PSCell change performed by the terminal based on candidate cells under at least one secondary cell group (SCG) and a change execution condition corresponding to each candidate cell; or
continuous special cell of a master cell group (PCell) handover, the continuous PCell handover being at least one PCell handover performed by the terminal based on candidate cells under at least one master cell group (MCG) and a handover execution condition corresponding to each candidate cell.

13. The network device according to claim 12, wherein the first information comprises at least one of the following:
cell identification information, a cell indicated by the cell identification information being a cell triggering the target action;
identification information of the terminal within the cell triggering the target action;
cell identification information of a first target cell accessed by the terminal during the target action process, the first target cell satisfying: a cell accessed by the terminal after triggering the target action; a cell triggering modification of candidate cells and/or modification of an execution condition corresponding to a candidate cell;
identification information of the terminal within the accessed first target cell during the execution of the target action process;
first indication information, the first indication information being used to indicate occurrence of a SCG failure, a random access failure, or a radio link failure (RLF) during the target action process;
cell identification information of a second target cell, the second target cell being a cell accessed by the terminal during the target action process;
identification information of the terminal within the second target cell;
a candidate cell list and/or an execution condition corresponding to a candidate cell updated during the target action process;
a candidate cell list and/or an execution condition corresponding to a candidate cell configured before the target action.

14. The network device according to claim 12, wherein the processor is configured to read the computer program in the memory and perform the following operation:
receiving, via the transceiver, a first target message sent by the terminal, the first target message carrying the first information;
wherein the first target message comprises at least one of the following:
a SCG failure message;
a RLF report;
a successful handover report;
another report other than an RLF report and a successful handover report.

15. The network device according to any one of claims 12 to 14, wherein the processor is configured to read the computer program in the memory and further perform the following operation:
sending, via the transceiver, second information to a target node, the second information comprising the first information, the second information being used for the target node to perform MRO.

16. The network device according to claim 15, wherein the processor is configured to read the computer program in the memory and perform the following operation:
sending, via the transceiver, a second target message to a target node, the second target message carrying the second information;
wherein the second target message comprises at least one of the following:
an SCG failure information report message;
an SCG failure transfer message;
another Inter-Node interface message other than an SCG failure information report message and an SCG failure transfer message;
a failure indication message;
a handover report message;
an uplink RAN configuration transfer message;
a downlink RAN configuration transfer message;
another Inter-Node interface message other than a failure indication message, a handover report message, an uplink RAN configuration transfer message, and a downlink RAN configuration transfer message.

17. The network device according to claim 15, wherein, in a case where the target action is continuous PSCell change, the target node comprises at least one of the following:
a node triggering the continuous PSCell change;
a node triggering update of a candidate cell list for PSCell during the continuous PSCell change process;
a first Secondary Node (SN), the first SN being an SN connected by the terminal before changing to a second SN, and the second SN being an SN that the terminal has accessed and that provides service to the terminal;
a target node when Secondary Node change fails.

18. The network device according to claim 15, wherein, in a case where the target action is continuous PCell handover, the target node comprises at least one of the following:
a node triggering the continuous PCell handover;
a node triggering update of a candidate cell list during the continuous PCell handover process;
a node where a target cell of the handover is located;
a node where a source cell of a successful handover is located.

19. The network device according to claim 15, wherein, in a case where the target action is continuous PSCell change, the second information further comprises at least one of the following:
candidate cells for the continuous PSCell change and/or change execution conditions corresponding to the candidate cells for the continuous PSCell change;
candidate cells updated during the continuous PSCell change process and/or change execution conditions corresponding to the candidate cells updated during the continuous PSCell change process;
a configuration node of change execution conditions corresponding to candidate cells for the continuous PSCell change;
second indication information, the second indication information being used to indicate that continuous PSCell change was configured when an SCG failure or random access failure occurred.

20. A terminal, comprising a memory, a transceiver, and a processor:
the memory is configured to store a computer program; the transceiver is configured to transmit and receive data under control of the processor; the processor is configured to read the computer program in the memory and perform the following operation:
sending first information to a network device, the first information being used for a network side to perform mobility robustness optimization (MRO) related to a target action;
wherein the first information is used to indicate information related to the target action;
the target action comprises:
continuous primary cell of a secondary cell group (PSCell) change, the continuous PSCell change being at least one PSCell change performed by the terminal based on candidate cells under at least one secondary cell group (SCG) and a change execution condition corresponding to each candidate cell; or
continuous special cell of a master cell group (PCell) handover, the continuous PCell handover being at least one PCell handover performed by the terminal based on candidate cells under at least one master cell group (MCG) and a handover execution condition corresponding to each candidate cell.

21. The terminal according to claim 20, wherein the first information comprises at least one of the following:
cell identification information, a cell indicated by the cell identification information being a cell triggering the target action;
identification information of the terminal within the cell triggering the target action;
cell identification information of a first target cell accessed by the terminal during the target action process, the first target cell satisfying: a cell accessed by the terminal after triggering the target action; a cell triggering modification of candidate cells and/or modification of an execution condition corresponding to a candidate cell;
identification information of the terminal within the accessed first target cell during the execution of the target action process;
first indication information, the first indication information being used to indicate occurrence of a SCG failure, a random access failure, or a radio link failure (RLF) during the target action process;
cell identification information of a second target cell, the second target cell being a cell accessed by the terminal during the target action process;
identification information of the terminal within the second target cell;
a candidate cell list and/or an execution condition corresponding to a candidate cell updated during the target action process;
a candidate cell list and/or an execution condition corresponding to a candidate cell configured before the target action.

22. The terminal according to claim 20 or 21, wherein the processor is configured to read the computer program in the memory and perform the following operation:
sending, via the transceiver, a first target message to the network device, the first target message carrying the first information;
wherein the first target message comprises at least one of the following:
a SCG failure message;
a RLF report;
a successful handover report;
another report other than an RLF report and a successful handover report.

23. An information transmission apparatus, applied to a network device, comprising:
a receiving unit, configured to receive first information sent by a terminal, the first information being used to assist a network side in performing mobility robustness optimization (MRO) related to a target action; and perform MRO related to the target action according to the first information;
wherein the first information is used to indicate information related to the target action;
the target action comprises:
continuous primary cell of a secondary cell group (PSCell) change, the continuous PSCell change being at least one PSCell change performed by the terminal based on candidate cells under at least one secondary cell group (SCG) and a change execution condition corresponding to each candidate cell; or
continuous special cell of a master cell group (PCell) handover, the continuous PCell handover being at least one PCell handover performed by the terminal based on candidate cells under at least one master cell group (MCG) and a handover execution condition corresponding to each candidate cell.

24. The information transmission apparatus according to claim 23, wherein the first information comprises at least one of the following:
cell identification information, a cell indicated by the cell identification information being a cell triggering the target action;
identification information of the terminal within the cell triggering the target action;
cell identification information of a first target cell accessed by the terminal during the target action process, the first target cell satisfying: a cell accessed by the terminal after triggering the target action; a cell triggering modification of candidate cells and/or modification of an execution condition corresponding to a candidate cell;
identification information of the terminal within the accessed first target cell during the execution of the target action process;
first indication information, the first indication information being used to indicate occurrence of a SCG failure, a random access failure, or a radio link failure (RLF) during the target action process;
cell identification information of a second target cell, the second target cell being a cell accessed by the terminal during the target action process;
identification information of the terminal within the second target cell;
a candidate cell list and/or an execution condition corresponding to a candidate cell updated during the target action process;
a candidate cell list and/or an execution condition corresponding to a candidate cell configured before the target action.

25. The information transmission apparatus according to claim 23, wherein the receiving first information sent by a terminal comprises:
receiving a first target message sent by the terminal, the first target message carrying the first information;
wherein the first target message comprises at least one of the following:
a SCG failure message;
a RLF report;
a successful handover report;
another report other than an RLF report and a successful handover report.

26. The information transmission apparatus according to any one of claims 23 to 25, further comprising:
a second sending unit, configured to send second information to a target node, the second information comprising the first information, the second information being used for the target node to perform MRO.

27. The information transmission apparatus according to claim 26, wherein the second sending unit is configured to:
send a second target message to a target node, the second target message carrying the second information;
wherein the second target message comprises at least one of the following:
an SCG failure information report message;
an SCG failure transfer message;
another Inter-Node interface message other than an SCG failure information report message and an SCG failure transfer message;
a failure indication message;
a handover report message;
an uplink RAN configuration transfer message;
a downlink RAN configuration transfer message;
another Inter-Node interface message other than a failure indication message, a handover report message, an uplink RAN configuration transfer message, and a downlink RAN configuration transfer message.

28. The information transmission apparatus according to claim 26, wherein, in a case where the target action is continuous PSCell change, the target node comprises at least one of the following:
a node triggering the continuous PSCell change;
a node triggering update of a candidate cell list for PSCell during the continuous PSCell change process;
a first Secondary Node (SN), the first SN being an SN connected by the terminal before changing to a second SN, and the second SN being an SN that the terminal has accessed and that provides service to the terminal;
a target node when Secondary Node change fails.

29. The information transmission apparatus according to claim 26, wherein, in a case where the target action is continuous PCell handover, the target node comprises at least one of the following:
a node triggering the continuous PCell handover;
a node triggering update of a candidate cell list during the continuous PCell handover process;
a node where a target cell of the handover is located;
a node where a source cell of a successful handover is located.

30. The information transmission apparatus according to claim 26, wherein, in a case where the target action is continuous PSCell change, the second information further comprises at least one of the following:
candidate cells for the continuous PSCell change and/or change execution conditions corresponding to the candidate cells for the continuous PSCell change;
candidate cells updated during the continuous PSCell change process and/or change execution conditions corresponding to the candidate cells updated during the continuous PSCell change process;
a configuration node of change execution conditions corresponding to candidate cells for the continuous PSCell change;
second indication information, the second indication information being used to indicate that continuous PSCell change was configured when an SCG failure or random access failure occurred.

31. An information transmission apparatus, applied to a terminal, comprising:
a first sending unit, configured to send first information to a network device, the first information being used for a network side to perform mobility robustness optimization (MRO) related to a target action;
wherein the first information is used to indicate information related to the target action;
the target action comprises:
continuous primary cell of a secondary cell group (PSCell) change, the continuous PSCell change being at least one PSCell change performed by the terminal based on candidate cells under at least one secondary cell group (SCG) and a change execution condition corresponding to each candidate cell; or
continuous special cell of a master cell group (PCell) handover, the continuous PCell handover being at least one PCell handover performed by the terminal based on candidate cells under at least one master cell group (MCG) and a handover execution condition corresponding to each candidate cell.

32. The information transmission apparatus according to claim 31, wherein the first information comprises at least one of the following:
cell identification information, a cell indicated by the cell identification information being a cell triggering the target action;
identification information of the terminal within the cell triggering the target action;
cell identification information of a first target cell accessed by the terminal during the target action process, the first target cell satisfying: a cell accessed by the terminal after triggering the target action; a cell triggering modification of candidate cells and/or modification of an execution condition corresponding to a candidate cell;
identification information of the terminal within the accessed first target cell during the execution of the target action process;
first indication information, the first indication information being used to indicate occurrence of a SCG failure, a random access failure, or a radio link failure (RLF) during the target action process;
cell identification information of a second target cell, the second target cell being a cell accessed by the terminal during the target action process;
identification information of the terminal within the second target cell;
a candidate cell list and/or an execution condition corresponding to a candidate cell updated during the target action process;
a candidate cell list and/or an execution condition corresponding to a candidate cell configured before the target action.

33. The information transmission apparatus according to claim 31 or 32, wherein the sending first information to a network device comprises:
sending a first target message to the network device, the first target message carrying the first information;
wherein the first target message comprises at least one of the following:
a SCG failure message;
a RLF report;
a successful handover report;
another report other than an RLF report and a successful handover report.

34. A processor-readable storage medium, storing a computer program, wherein the computer program is used to cause the processor to execute the method according to any one of claims 1 to 11.
